# EUROPEAN PATENT SPECIFICATION

(11) **EP 0 660 910 B1**
(45) Date of publication and mention of the grant of the patent: **04.11.1998**
(21) Application number: 93919035.1
(22) Date of filing: 27.08.1993
(51) Int. Cl.: F16L 59/14

(54) **METHOD AND APPARATUS FOR INSULATING**
VERFAHREN UND VORRICHTUNG ZUR ISOLIERUNG
PROCEDE ET DISPOSITIF D'ISOLATION

(30) Priority: 31.08.1992 DK 108292; 24.11.1992 DK 141392
(43) Date of publication of application: 05.07.1995
(73) Proprietor: Rockwool International A/S, 2640 Hedehusene (DK)
(72) Inventor: JEPSEN, Kjeld, DK-3550 Slangerup (DK); CRIDLAND, Ian, DK-2720 Vanloese (DK); PETERSEN, Joergen Skjold, DK-4000 Roskilde (DK)
(74) Representative: Nielsen, Henrik Sten
(86) International application number: DK9300281
(87) International publication number: WO9405947

(56) References cited:
- WO-A-91/18237

## Description

The present invention relates to the technical field of insulation. More precisely, the present invention relates to a technique involving insulating a surface of a body having a surface temperature at or below the dew point of the ambient air by means of an insulating layer.

In numerous applications, a body is kept at a temperature at or below the dew point of the ambient air, which body may e.g. constitute a pipe of a freezing or refrigerator system or of an air-conditioning system, or a pipe supplying cold water. Alternatively, the body may e.g. constitute a structure of a building which is exposed to a low temperature from the environment, whereas, in the present context, the ambient air refers to the heated air of the building, which ambient air is typically heated to a temperature above the temperature of the environment. The ambient air also contains an increased amount of moisture as compared to the environment. The insulating layer may comprise mineral wool, such as glass wool, rock wool or slag wool, or may alternatively comprise foamed plastics or elastomeric materials, such as closed or open cells of foamed material, e.g. polyurethane foam, or may further alternatively comprise combinations of the materials mentioned above.

Hitherto, it has been attempted to block transfer of moisture from the ambient air to the body in question having a surface temperature at or below the dew point of the ambient air by providing a moisture-transfer blocking foil, such as an aluminum or plastic foil, which serves to block the diffusion of moisture into the insulating layer and further into contact with the surface of the body having a surface temperature at or below the dew point of the ambient air.

Various problems, however, occur, such as problems relating to foil junctions and perforation of the foil constituting the moisture or water-transport-blocking barrier, and these problems in some instances, in particular in connection with non-water repellent products or materials, result in moisture penetrating into the insulating layer and causing generation of condensed water at the surface of the body. The generation of condensed water at the surface of the body, firstly, results in a reduction of the insulating property of the insulating layer, and may, secondly, cause corrosion and/or deterioration of the surface of the body or of the body itself and/or of the insulating layer.

From international patent application No. PCT/DK91/00132, publication No. WO 91/18237, an insulating system for insulating e.g. a pipe supplying cold water is described. This insulating system is of an elaborated structure, which renders the insulating system complex and expensive. A serious drawback relating to the insulating system known from the above-mentioned international patent application is the fact that the insulating system is adapted to new applications exclusively, as existing insulating systems simply have to be replaced by insulating systems implemented in accordance with the teachings of the above-mentioned international patent application.

An object of the present invention is to provide a simple device for removing condensed water from a surface of a body having a surface temperature at or below the dew point of the ambient air, which device, on the one hand, renders it possible to renovate existing insulating systems, and, on the other hand, is adaptable to specific application requirements, such as requirements relating to the water-removal capacity requested, the moisture content of the ambient air, and further the temperature difference between the surface temperature of the body and the temperature of the ambient air.

A further object of the present invention is to provide an integral heat-insulating assembly comprising devices implemented in accordance with the teachings of the present invention, which heat-insulating assembly fulfills the requirements for removing condensed water from the surface of a body having a surface temperature at or below the dew point of the ambient air.

A still further object of the present invention is to provide a novel technique rendering it possible to renovate existing insulating systems without removing the existing insulating system such as an existing heat-insulating assembly, still fulfilling specific requirements relating to the water-removal capability requested, the moisture content of the air, and further the temperature difference between the surface temperature of the body and the temperature of the ambient air.

A particular advantage of the present invention is the fact that the device for removing condensed water from the surface of a body having a surface temperature at or below the dew point of the ambient air is readily applicable in connection with existing insulating applications and further in connection with renovation of existing insulating applications or alternative insulating applications where condensed water is removed in accordance with the teachings of the present invention, yet inadequately or insufficiently.

A further advantage of the present invention originates from the fact that according to the novel technique of renovating existing insulating systems, the condensed water is removed from the surface of the body having a surface temperature at or below the dew point of the ambient air by providing access to the surface of the body at a single point or along a line such as through a through-going passage or a slit extending through an annular insulating assembly circumferentially encircling the body being of a tubular configuration.

A particular feature of the present invention originates from the fact that the device for removing condensed water from the surface of a body having a surface temperature at or below the dew point of the ambient air is readily replaceable by a novel water-removal device, provided the water-removal device is malfunctioning or is of an inadequate or insufficient water-removal capability.

A further feature of the present invention relates to the fact that existing insulating systems may be renovated for the removal of condensed water from the surface of the body which is insulated by means of the insulating system in question by the employment of merely two additional components or elements which are easily applied at the application site in question without the need of specialized equipment or extreme skill as the components or elements are readily adaptable to the application in question, i.e. the insulating system in question, and readily applied by means of hand tools and fixation elements such as adhesive tape or the like.

The above objects, the above advantages and the above features, together with numerous other objects, advantages and features, which will be evident from the below detailed description of preferred embodiments of the insulating assembly according to the present invention, are, in accordance with a first aspect of the present invention, obtained by a heat-insulating assembly for insulating a surface of a body relative to the ambient air, the surface of the body having a surface temperature at or below the dew point of the ambient air, comprising:
a heat-insulating layer defining an insulating body covering the surface of the body, the insulating body defining an inner surface and an outer surface, the inner surface being arranged juxtaposed the surface of the body,
a water-removal means of a water-transport-allowing material, the water-removal means being embedded within a through-going passage of the insulating body and being exposed at the inner surface of the insulating body so as to contact the water-removal means embedded within the through-going passage with the surface of the body in a point contact or a line contact for allowing transfer of condensed water from the surface of the body to the water-transport-allowing material of the water-removal means, and
a water evaporation means of a water-transport-allowing material, the evaporation means defining an exposed evaporation surface and being arranged at the outer surface of the insulating body and communicating with the water-removal means so as to allow transfer of water from the water-removal means to the evaporation means, the exposed evaporation surface of the evaporation means being exposed to the ambient air.

In the present context, the expression "the water-transport-allowing material" means any material allowing the tranfer or transport of water through the material from the surface of the body, through the heat-insulating assembly and to the ambient air. Preferably, the material constituting the water-transport allowing material exhibits characteristics promoting or accelerating the transfer of water through capillary action, through suction, through hygroscopic characteristics of the material or any other action or through any other characteristic of the material having chemical or physical origin.

According to the presently preferred embodiment of the heat-insulating assembly according to the first aspect of the present invention, the body is a tubular body, the heat-insulating layer defining an annular insulating body circumferentially encircling the tubular body, and the inner surface and the outer surface being cylindrical surfaces and the inner cylindrical surface being arranged juxtaposed the surface of the tubular body.

According to the presently preferred embodiment of the heat-insulating assembly according to the first aspect of the present invention, the water-transport-allowing material of the water removal means and of the water evaporation means are preferably capillary suction materials in order to obtain the advantages discussed above with reference to the first and second aspects of the present invention.

The heat-insulating assembly according to the first aspect of the present invention preferably further comprises a vapour barrier layer arranged at the outer surface of the insulating body.

According to the presently preferred embodiment of the heat-insulating assembly according to the first aspect of the present invention, the water-transport-allowing material of the water-removal means preferably protrudes from the inner surface of the insulating body.

According to a first advantageous embodiment of the heat-insulating assembly according to the first aspect of the present invention, the water-removal means is constituted by an annular disc of the water-transport-allowing material, which annular disc is embedded between two cylindrical segments of the annular insulating body.

The water-removal means of the heat-insulating assembly according to the first aspect of the present invention may be constituted by a separate element or component, such as a foil of the water-transport-allowing material, or, according to an advantageous embodiment of the heat-insulating assembly, be constituted by an annular segment of the annular, disc-shaped water-removal means protruding from the outer cylindrical surface of the annular insulating body.

According to a second advantageous embodiment of the heat-insulating assembly according to the first aspect of the present invention, the water-removal means is constituted by a cord of the water-transport-allowing material, which cord is arranged circumferentially encircling the tubular body and is embedded between two cylindrical segments of the annular insulating body, which cylindrical segments together define the through-going passage. According to the second advantageous embodiment of the heat-insulating assembly according to the third aspect of the present invention, the cord of the water-transport-allowing material is simply arranged in a slit provided through the annular insulating body.

According to the second advantageous embodiment of the heat-insulating assembly according to the first aspect of the present invention, the evaporation means is preferably constituted by a foil of the water-transport-allowing material, which foil is arranged circumferential encircling the outer cylindrical surface of the annular insulating body. The communication between the cord of the water-transport-allowing material and the foil circumferentially encircling the outer cylindrical surface of the annular insulating body for allowing transfer of water from the cord to the foil is simply established by contacting the foil with a free end of the cord protuding from the outer cylindrical surface of the annular insulating body from the through-going passage through which the cord extends.

According to a third advantageous embodiment of the heat-insulating assembly according to the first aspect of the present invention, the water-removal means is constituted by a layer of a hygroscopic paint applied to an annular end surface part of a cylindrical segment of the annular insulating body, which annular end surface part of the cylindrical segment together with an annular end surface part of an adjacent cylindrical segment of the annular insulating body define the through-going passage. Surprisingly, it has been realized that a hygroscopic paint may simply serve as the water-removal means for transfer of water from the surface of the body through the heat-insulating assembly into the environment for evaporation from the evaporation means.

Furthermore, it has been realized that the hygroscopic paint may further serve as the evaporation means as the evaporation means may be constituted by a further layer of the hygroscopic paint applied to the outer cylindrical surface part of the annular insulating body.

The further layer of the hygroscopic paint constituting the evaporation means may be applied to the outer cylindrical surface of the cylindrical segment the annular end surface of which is provided with the layer of the hygroscopic paint constituting the water-removal means. Thus, the layer of the hygroscopic paint applied to the annular end surface part of the cylindrical segment and the further layer of the hygroscopic paint preferably constitute an integral layer of the hygroscopic paint. Alternatively, the partly hygroscopic paint applied to the outer cylindrical surface part of the annular insulating body may be applied to the outer cylindrical surface of the adjacent cylindrical segment or applied to the outer cylindrical surface part of the cylindrical segment the annular end surface part of which is provided with the layer of the hygroscopic paint constituting the water-removal means as well as the outer cylindrical surface of the adjacent cylindrical segment.

The third advantageous embodiment of the heat-insulating assembly according to the first aspect of the present invention may be implemented as a prefabricated segmented structure or alternatively be produced at the application side by simply applying the hygroscopic paint to an annular end surface part of a cylindrical segment of the annular insulating body, arranging the adjacent cylindrical segment of the annular insulating body and further applying the further layer of the hygroscopic paint at the outer cylindrical surface of the annular insulating body constituted by the cylindrical segments. The hygroscopic paint constituting the water removal means and also preferably the evaporation means may according to a further embodiment of the heat-insulating assembly according to the third aspect of the present invention be provided at the inner cylindrical surface of the annular insulating body for increasing the area of contact between the water-removal means and the surface of the body which surface is to be drained.

The third advantageous embodiment of the heat-insulating assembly according to the first aspect of the present invention preferably further comprises a perforated foil of a vapor barrier material applied to the water evaporation means and exposing the water evaporating means through perforations of the perforated foil. The perforated foil may, thus, constitute a foil serving the purpose of on the one hand protecting the further layer of the hygroscopic paint constituting the evaporation means and on the other hand exposing the evaporation means in order to allow avaporation of water from the evaporation means. The perforated foil may serve the additional purpose of closely adjoining the annular end surface parts of the adjacent cylindrical segments for providing a substantially continuous annular insulating body structure.

A particular application of the assembly according to the first aspect of the present invention relates to the field of removing condensed water from a pipe supplying e.g. a freezing or refrigerator fluid or cold water, and which is insulated by means of an annular insulating assembly circumferentially encircling the pipe, which constitutes the body having a surface temperature at or below the dew point of the ambient air.

The heat-insulating assembly according to the first aspect of the present invention may be implemented constituting a heat-insulating assembly including as an integral component a device for removing condensed water from a surface of a body having a surface temperature at or below the dew point of the ambient air. Consequently, according to a specific embodiment of the assembly according to the first aspect of the present invention, the water-removal means are included in a device for removing condensed water from the surface of the body, the heat-insulating layer defining an assembly thickness, and the device comprising:
a conduit means of a tubular configuration and defining a inner through-going passage, the conduit means having a length substantially equal to the assembly thickness, and the conduit means defining opposite first and second open ends,
a plug means of a water-transport-allowing material, the plug means being received within the conduit means and constituting a filling of the inner through-going passage, the water-transport-allowing material being exposed at the first open end of the conduit means,
a water evaporation means of a water-transport-allowing material, the evaporation means defining an exposed evaporation surface and being arranged at the second open end of the conduit means, and the evaporation means communicating with the plug means at the second open end of the conduit means so as to allow transfer of water from the plug means to the evaporation means, and
the conduit means being received within the through-going passage of the heat-insulating layer and fastened relative thereto in a position in which the first open end of the conduit means is positioned adjacent to the surface of the body, so as to allow transfer of condensed water from the surface of the body to the water-transport-allowing material of the plug means being exposed at the first open end of the conduit means, and in which position the exposed evaporation surface of the evaporation means is positioned at the outer surface of the heat-insulating layer and is exposed to the ambient air.

According to a further embodiment of the heat-insulating assembly according to the first aspect of the present invention including the above defined device as an integral component, a plurality of devices are included in the heat-insulating assembly.

The device for removing condensed water from the surface of a body having a surface temperature at or below the dew point of the ambient air is of a simple structure.

According to presently preferred embodiment of the heat-insulating assembly according to the first aspect of the present invention and including the above defined device as an integral component, the water-transport-allowing material of the plug means and further the water-transport-allowing material of the water evaporation means are preferably capillary suction materials rendering it possible to provide the device constituting an integral component of the heat-insulating assembly according to the first aspect of the present invention in any arbitrary orientation relative to the vertical orientation as the condensed water is removed from the surface of the body in question through capillary suction irrespective of the gravitational force to which the condensed water is exposed.

Further according to the presently preferred embodiment of the heat-insulating assembly according to the first aspect of the present invention and including the above defined device as an integral component, the water-transport-allowing material of the plug means preferably protrudes from the first open end of the conduit means in order to ensure that condensed water present at the surface of the body is caused to be transferred to the water-transport-allowing material of the plug means and further to the water-transport-allowing material of the water evaporation means for causing evaporation of the condensed water therefrom.

The conduit means of the preferred embodiment of the heat-insulating assembly according to the first aspect of the present invention and including the above defined device as an integral component may constitute a single element, such as a tubular element, yet preferably comprises a flange means provided at the second open end of the conduit means, which flange means defines a support surface for supporting the evaporation means. For fixating the evaporation means relative to the flange means of the conduit means, the support surface may, in accordance with advantageous embodiments of the heat-insulating assembly according to the first aspect of the present invention and including the above defined device as an integral component, be provided with an adhesive layer for adhering the evaporation means to the support surface of the flange means.

The flange means of the heat-insulating assembly according to the first aspect of the present invention and including the above defined device as an integral component may additionally serve the purpose of providing and defining a contact surface for establishing facial contact with the insulating assembly and consequently for fixating the device relative to the insulating assembly. The fixation of the preferred embodiment of the device relative to the heat-insulating assembly according to the first aspect of the present invention and including the above defined device as an integral component may be established by means of an adhesive layer provided at the contact surface of the flange means, which adhesive layer consequently constitutes the fastening means for fastening the conduit means relative to the insulating assembly. The fastening means may alternatively be provided by adhesive strips provided at the water evaporation means, by locking means, such as bards, provided at the conduit means or by any other appropriate fixation or fastening means constituting separate or integral elements or components of the conduit means, the plug means and of the water evaporation means characteristic of the assembly according to the first aspect of the present invention.

According to specific, advantageous embodiments of the heat-insulating assembly according to the first aspect of the present invention and including the above defined device as an integral component for insulating pipes or similar conduits, the flange means is preferably of a curved configuration, further preferably constitutes a cylindrical segment. The cylindrical segment may define an arch of the order of 40°-240°, such as an arch of the order of 40°-60° or of the order of 180°-340°, preferably approximately 60° or approximately 200°-220°. For providing the fastening means constituting a cylindrical segment defining an arch of the order of 180°-240°, the flange means may constitute an element gripping round the insulating assembly and consequently constitute the fastening means of the device, which need not be provided with any additional means for fastening the conduit means relative to the insulating assembly.

The above objects, the above advantages, and the above feature together with numerous other objects, advantages, and features, which will be evident from the below detailed description of preferred embodiments of the inventions, are, in accordance with a second aspect of the present invention provided by a method, the body being tubular and the heat-insulating assembly defining an annular insulating body circumferentially encircling the tubular body, the annular insulating body defining an inner cylindrical surface and an outer cylindrical surface, the inner cylindrical surface being arranged juxtaposed the surface of the tubular body, and the outer cylindrical surface being exposed to the ambient air, the method comprising:
the through-going passage constituting a through-going circumferential slit extending through the insulating body from the outer cylindrical surface to the inner cylindrical surface, so as to divide the annular insulating body into two segments having juxtaposed end surface parts,
the water-removal means being constituted by a layer of a hygroscopic paint to be applied to at least one of the end surface parts of the segments, the layer extending from the inner cylindrical surface of the annular insulating body to the outer cylindrical surface of the annular insulating body and the water evaporation means being constituted by a further layer of a hygroscopic paint to be applied to the outer cylindrical surface of the annular insulating body, the further layer defining an exposed evaporation surface at the outer cylindrical surface of the annular insulating body.

The method according to the second aspect of the present invention may be implemented in accordance with the above described preferred embodiments of the heat-insulating assembly according to the first aspect of the present invention.

The present invention will now be further described with reference to the drawing, in which
Figure 1 is a perspective, schematic and sectional view of a pipe insulated by means of an annular insulating body provided with a first embodiment of a device according to the present invention for removing condensed water from the outer surface of the pipe,
figure 2 is a perspective, schematic and sectional view similar to the view of figure 1 of a first embodiment of a heat-insulating assembly according to the present invention, comprising annular, cylindrical insulating segments and annular, disc-shaped water-removal elements,
figure 3 is a perspective, schematic and sectional view similar to the view of figure 1 of a second embodiment of the device according to the present invention for removing condensed water from the outer surface of the pipe, also shown in figures 1 and 2,
figure 4 is a schematic and sectional view of a heat-insulating layer circumferentially encircling a pipe, the surface of which is drained in accordance with the teachings of the present invention,
figure 5 is a vertical and sectional view of a second embodiment of the heat-insulating assembly according to the present invention circumferentially encircling a pipe, the surface of which is drained by means of angularly spaced-apart devices according to the present invention constituting integral elements of the heat-insulating assembly,
figure 6 is a vertical and sectional view of the first embodiment of the device according to the present invention, also shown in figure 1,
figures 7a, 7b, 7c and 7d are schematic and sectional views of alternative embodiments of the device according to the present invention for removing condensed water,
figures 8 and 9 are perspective, schematic, and sectional views similar to the view of fig. 1 illustrating a novel technique of renovating an existing heat-insulating assembly for removing condensed water from the outer surface of the pipe which is insulated by means of the heat-insulating assembly,
figures 10 and 11 are perspective, schematic, and sectional views similar to the view of fig. 1 illustrating an alternative technique of renovating an existing heat-insulating assembly for removing condensed water from the outer surface of the pipe which is insulated by means of the heat-insulating assembly,
figure 12 is a diagramme illustrating the effect of draining a heat-insulated pipe in accordance with the teachings of the present invention by employing a prototype implementation of the device according to the present invention for removing condensed water,
figure 13 is a perspective, schematic and sectional view similar to the view of fig. 1 of a pipe insulated by means of an annular insulating body made from foamed insulating plastics material provided with a first embodiment of the device according to the present invention for removing condensed water from the outer surface of the pipe,
figure 14 is a vertical and sectional view similar to the view of fig. 6 of the annular insulating body shown in fig. 13 and of the first embodiment of the device according to the present invention, also shown in figs. 1, 6 and 13,
figure 15 is a perspective, schematic and sectional view similar to the view of fig. 2 of a sligtly modified embodiment of the heat-insulating assembly according to the present invention as compared to the first embodiment shown in fig. 2,
figures 16 and 17 are perspective, schematic and sectional views of further embodiments of the heat-insulating assembly according to the present invention, each comprising an annular, cylindrical insulating segment provided with a layer of a hygroscopic paint,
figures 18 and 19 are perspective, schematic and sectional views similar to the view of figures 8 and 9 illustrating the technique of applying the embodiments of the heat-insulating assembly according to the present invention shown in figures 16 and 17, and
figures 20, 21 and 22 are perspective, schematic and sectional views similar to the views of figures 16/17, 18 and 19, respectively, of a further embodiment of the heat-insulating assembly according to the present invention, comprising annular, cylindrical insulating segments and a foil of a water transport allowing material and also illustrating the technique of mounting the annular, cylindrical insulating segments.

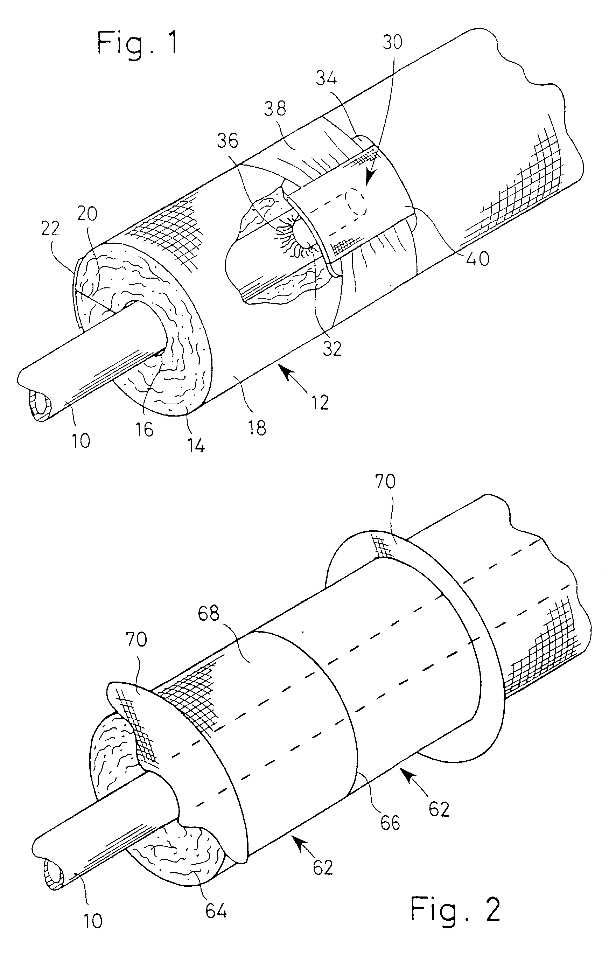

In figure 1, a pipe 10 is shown, which pipe constitutes e.g. a cooling pipe of a freezing or refrigerator system or of an air-conditioning system, or a pipe supplying cold water. The pipe 10 serves the purpose of transmitting a fluid, which has a fairly low temperature, such as a cooling or freezing fluid or cold water. In order to prevent that the fluid transmitted through the pipe 10 is heated, the pipe 10 is provided with an outer insulating covering designated the reference numeral 12 in its entirety. The insulating covering 12 comprises basically an insulating body 14 constituted by a mineral wool body, such as a glass wool, rock wool or slag wool body of an annular configuration defining an inner cylindrical surface 16, which is arranged adjacent to or juxtaposed the outer cylindrical surface of the pipe 10, and further an outer cylindrical surface 18, which is provided with a water-transport blocking barrier or foil 18, such as an aluminum foil or a plastic foil, serving the purpose of reducing the amount of moisture penetrating into the insulating body 14 from the ambient air, which moisture is condensed at the cooled or cold outer surface of the pipe 10, resulting in the generation of condensed water at the outer surface of the pipe 10.

As is evident from figure 1, the insulating covering 12 is provided with a longitudinal cut 20 serving the purpose of allowing the annularly configurated insulating covering 12, to be arranged circumferentially encircling the pipe 10. For assembling the insulating covering 12 circumferentially encircling the pipe 10, an adhesive strip 22 is provided, which strip is a water-transport blocking strip or foil, e.g. constituted by an aluminum foil or a plastic foil. The adhesive strip 22 is applied bridging the longitudinal cut 20 of the insulating covering 12 for providing a sealed insulating covering 12 circumferentially encircling the pipe 10.

As the water-transport blocking barrier 18 does, however, not provide a hermetic sealing of the outer cylindrical surface of the insulating body 14, and as the adhesive tape or strip 22 may not provide a hermetic sealing of the longitudinal cut of the insulating covering 12, and as further the water-transport blocking barrier 18 and/or the adhesive strip 22 may be perforated unintentionally, moisture penetrates through the insulating body 14, resulting in the generation of condensed water at the outer surface of the pipe 10.

The generation of condensed water at the outer surface of the pipe 10 may, firstly, result in a reduction of the insulating property of the insulating covering 12, as the condensed water is absorbed by the material of the insulating body 14, increasing the heat transfer properties of the insulating body 14 and consequently reducing the insulating property of the insulating covering 12. Secondly, the condensed water may further cause corrosion and/or deterioration of the material of the pipe 10 and of the material of the insulating body 14.

As a hermetic sealing of the insulating covering 12 is not obtainable for tightly sealing the insulating body 14 relative to the ambient air, for preventing the penetration of moisture from the ambient air into the insulating body 14 and further to the outer surface of the pipe 10, a water-removal device is, in accordance with the teachings of the present invention, provided for removing condensed water which is inevitably generated at the outer surface of the pipe 10 from the outer surface of the pipe 10 to the outer cylindrical surface 18 of the insulating covering 12, from which outer surface the condensed water is caused to evaporate to the ambient air.

A first embodiment of a water-removal device according to the present invention implemented as a prototype implementation of the water-removal device is shown in figure 1, which first embodiment is designated the reference numeral 30. The first embodiment 30 of the water-removal device comprises a conduit component 32 of a tubular configuration defining a first or inner open end and a second or outer open end. The first end of the conduit component 32 is arranged adjacent to the outer surface of the pipe 10, whereas the outer end of the conduit 32 is connected to a flange component 34. Within the inner space defined within the conduit component 32, a water-transport-allowing material or water-absorbent material is arranged, which material further protrudes from the first end of the conduit component 32, as is shown in figure 1, which protruding material is designated the reference numeral 36. The material received within the conduit component 32 and constituting a filling of the inner space thereof communicates in liquid-transfer relationship at the second end of the conduit component 32 with a foil 38 of water-transport-allowing material or water-absorbent material.

As is evident from figure 1, the foil 38 is wrapped around the outer cylindrical surface of the insulating covering 12 and is at its liquid-transfer junction with the water-transport-allowing material, which is received within the inner space of the conduit component 32, covered by a covering plate 40. The foil 38 is consequently sandwiched between the outer surface of the flange component 34 and the inner surface of the covering plate 40. The outermost ends of the foil 38 are preferably fixated relative to the outer cylindrical surface of the insulating covering 12 by means of adhesive strips or adhesive glue. Alternatively, the outermost ends of the foil 38 may constitute flaps, which are freely exposed to the ambient air for causing evaporation of condensed water transmitted from the outer surface of the pipe 10 through the material received within the conduit component 32 and protruding from the first or inner end thereof, as designated by the reference numeral 36, to the foil material 38 through the liquid-transfer junction at the second end of the conduit component 32.

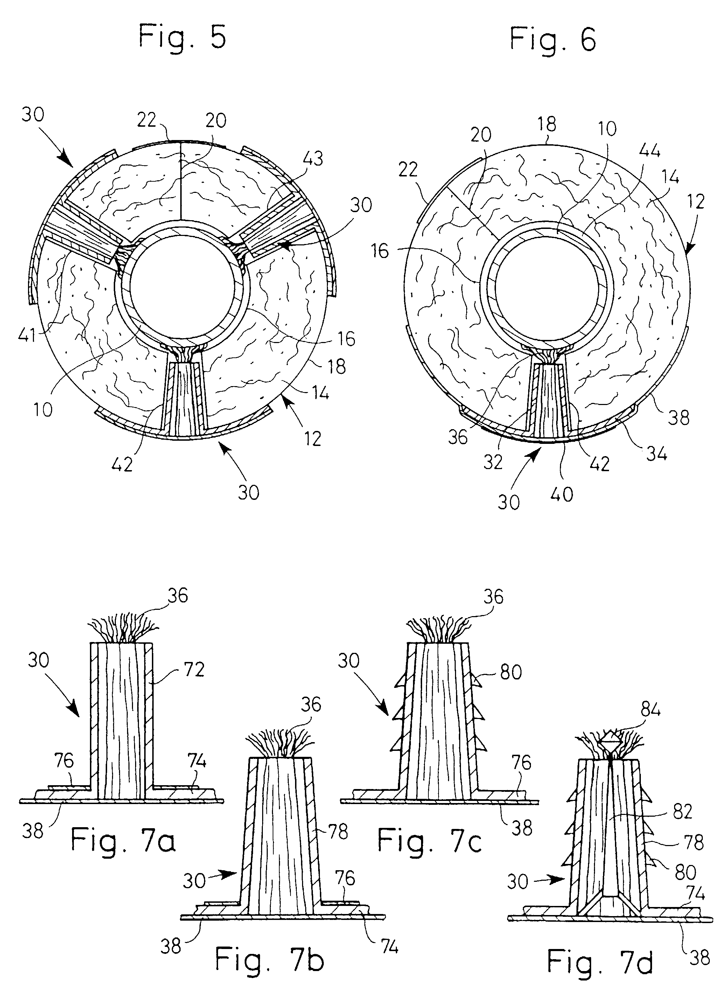

Figure 6 is a vertical and sectional view of the pipe 10, the insulating covering 12 and the first embodiment 30 of the water-removal device according to the present invention.

From figure 6 it is evident that the material 36 protruding from the first end of the conduit component 32 is establishing contact with the outer surface of the pipe 10. Figure 6 further illustrates a through-going bore 42 of the insulating covering 12, through which bore 42 the conduit component 32 of the first embodiment 30 extends from the outer cylindrical surface 18 of the insulating covering 12 to a position adjacent to, yet recessed relative to, the inner cylindrical surface 16 of the insulating covering 12.

From figures 1 and 6 it is further evident that the insulating covering 12 does not provide a tight, circumferential sealing round the pipe 10, as a small interspace 44 is provided between the inner cylindrical surface 16 of the insulating covering 12 and the outer cylindrical surface of the pipe 10.

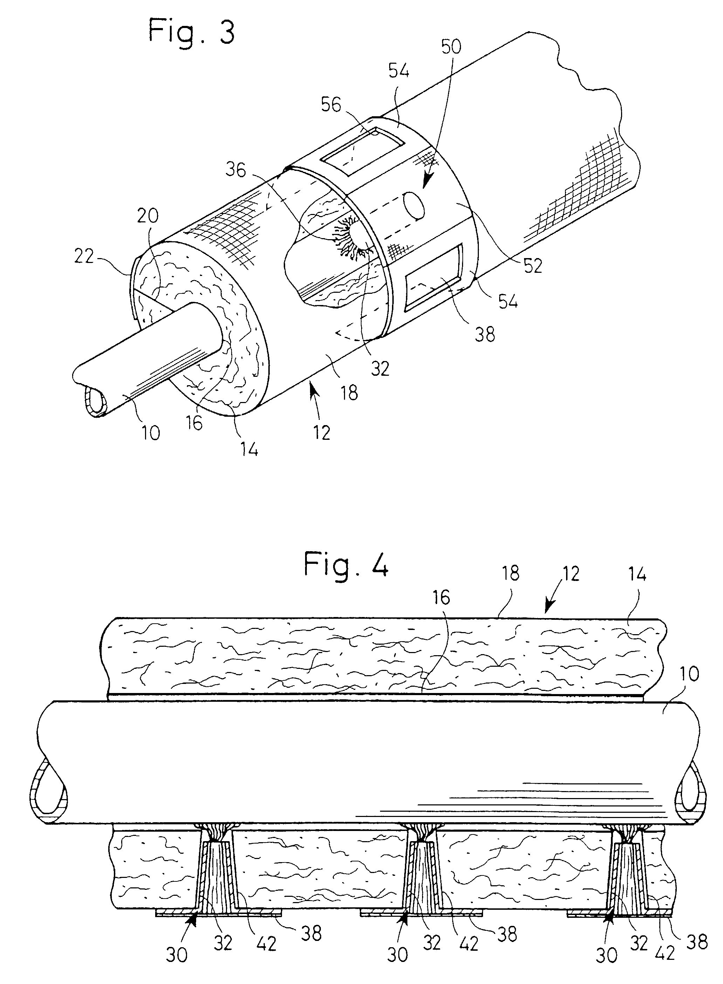

In figure 3, a perspective, schematic and sectional view similar to the view of figure 1 is shown, illustrating a second embodiment 50 of the water-removal device according to the present invention.

The second embodiment 50 of the water-removal device is like the first embodiment 30 of the water-removal device, shown in figure 1, provided with the conduit component 32, which is received within a bore of the insulating covering 12, such as the bore 42 shown in figure 6. The water-transport-allowing material 36 protruding from the first end of the conduit component 32 is also shown in figure 3. The second end of the conduit component 32 is, similar to the first embodiment 30 shown in figure 1, connected to a flange component 52, which, however, differs from the flange component 34 shown in figure 1, in that it is of a structure integrally comprising a component similar to the covering plate 40 and provided with integral wing components 54, which are provided with windows 56, in which the foil material 38 is exposed. The flange component 52 and the wing components 54 together constitute a segment of a annular, cylindrical element defining an arc of the order of 240°, as is illustrated by dotted lines in figure 3. This structure allows the second embodiment 50 to be arranged as a clip-on structure, which is maintained in position by means of the wing components 54, which encircle approximately 240° of the outer cylindrical surface 18 of the insulating covering 12. Consequently, the embodiment 50 is maintained in position by means of the wings 54 and need no additional fixation, such as additional adhesive foils, adhesive strips or adhesive glue. Additional fixation by means of adhesive foils, adhesive strips or adhesive glue, may, however, be used if desired.

In figure 4, a schematic and sectional view, illustrating the technique of draining an outer surface of a pipe which is insulated by means of a heat-insulating assembly circumferentially encircling the pipe, is shown.

According to the teachings of the present invention, the insulating covering 12 circumferentially encircling the pipe 10 and comprising the insulating body 14 defining the inner cylindrical surface 16 and the outer cylindrical surface 18, at which the material-diffusion blocking barrier or foil 18 is provided, is provided with a plurality of bores 42, in which water-removal devices constituted by water-removal devices implemented by the first embodiment 30 shown in figures 1 and 6 are received. As is evident from figure 4, the water-removal devices are preferably arranged at the lowermost position of the pipe 10, as, due to the gravitational force, any condensed water is caused to be accumulated at the lower side surface of the pipe 10. Therefore, a maximum water-removal effect is obtained provided the water-removal devices implemented in accordance with the teachings of the present invention are provided at the lowermost positions of the insulating covering 12 and extend to positions adjacent to the lower side surface of the pipe 10.

According to a particular aspect of the present invention, the water-removal device implemented in accordance with the teachings of the present invention may be incorporated into the insulating body circumferentially encircling the tube to be insulated by means of the insulating body.

In figure 2, a heat-insulating assembly according to the present invention is shown, in which annular disc-shaped water-removal elements constituting water-removal devices are incorporated. The pipe 10 is provided with an insulating covering composed of a plurality of annular, cylindrical insulating coverings 62, each comprising an insulating body 64 similar to the insulating body 14 shown in figures 1, 3 and 6, each of which insulating bodies defines an inner cylindrical surface arranged adjacent to or juxtaposed the outer cylindrical surface of the pipe 10 and an outer cylindrical surface together defining an overall outer cylindrical surface 68 of the heat-insulating assembly. A solid line 66 defines a line of separation between two adjacent segments 62.

Two disc-shaped water-removal elements 70 constituted by annular discs of water-transport-allowing material are also shown in figure 2. The annular disc-shaped water-removal elements define an inner diameter, which is substantially equal to, still slightly smaller than the outer diameter of the pipe 10, and an outer diameter, which is larger than the outer diameter of the outer cylindrical surface 68. Consequently, the water-removal elements 70 each provides a tight fit around the outer cylindrical surface of the pipe 10 establishing a line contact between each of the elements 70 and the outer cylindrical surface of the pipe 10. Further, each of the water-removal elements 70 provides a rim part protruding outwardly from the outer cylindrical surface 68 and defining an evaporation surface, from which condensed water transferred from the outer cylindrical surface of the pipe 10 and through the water-transport-allowing material of the water-removal element 70 in question is caused to evaporate, as the outwardly protruding rim segment of the water-removal element 70 in question is exposed to the ambient air.

The outwardly protruding rim parts of the water-removal elements 70 may be taped to the outer cylindrical surface 68 of the insulating covering by means of a water-transparent tape or perforated tape or alternatively and preferably by means of a non-water-transparent tape, e.g. a perforated tape, which, however, provides uncovered parts of the outwardly protruding rim parts which uncovered parts are arranged bend along the outer cylindrical surface 68 of the insulating convering. The non-water transparent tape may further serve the purpose of sealing the separation between any two adjacent segments 62 of the insulating covering for preventing that water to any substantial extent penetrates into the separation or spacing between the two segments.

In figure 5, a second or alternative embodiment of the heat-insulating assembly according to the present invention, comprising integral water-removal devices implemented in accordance with the teachings of the present invention, is shown.

In figure 5, the pipe 10 is circumferentially encircled by the insulating covering 12, in which angularly spaced-apart, through-going bores 41, 42 and 43 are provided. Within each of the bores 41, 42 and 43, a water-removal device implemented by the first embodiment 30 of the water-removal device according to the present invention, shown in figures 1 and 6, is received. Contrary to the embodiment shown in figure 1 or in figure 6, the water-removal devices 30 shown in figure 5 are, however, fixated relative to the insulating covering 12, constituting integral components of a heat-insulating assembly provided with integral water-removal devices. Whereas the embodiment of the heat-insulating assembly shown in figure 5 is readily adaptable to insulating pipes, such as cold-water pipes or pipes through which e.g. a cooling or freezing fluid is transferred, the water-removal device constituting a separate element as disclosed in figures 1, 3 and 6 and is readily adaptable to new installations or applications as well as renovation applications, i.e. applications by which an existing insulating covering is to be drained in accordance with the teachings of the present invention.

The first embodiment 30 of the water-removal device according to the present invention discussed above with reference to figures 1, 3, 4, 5 and 6 may be implemented in accordance with various fixation and application techniques. These alternative techniques are illustrated in figures 7a, 7b, 7c and 7d.

In figure 7a, the conduit component of the water-removal device is constituted by a cylindrical tubular element 72, which defines a first open end, from which the material 36 protrudes, and an opposite, second open end, at which a flange component 74 is provided, which flange component serves the same purpose as the above-described flange components 34 and 52. The flange component 74 supports the foil 38 at an outer supporting surface thereof and is provided with an adhesive coating 76 at the opposite surface of the flange component, which surface is to be arranged in facial contact with the outer surface of the insulating covering, in which the water-removal device 30 is to be embedded.

The water-removal device 30 shown in figure 7b differs from the water-removal device shown in figure 7a in that the cylindrical, tubular element 72 shown in figure 7b is substituted by a conical, tubular element 78 similar to the conduit component 32 discussed above. The water-removal device shown in figure 7b is also to be fixated relative to the insulating covering, in which the water-removal device is to be received and embedded, and provided with the adhesive coating 76.

In figures 7c, the adhesive coating 76 is omitted, whereas the conical, tubular element 78 is provided with outwardly protruding bards 80 serving the purpose of fixating the water-removal device 30 as the water-removal device 30 is introduced into a bore or aperture of the insulating covering, in which the water-removal device is to be received.

The embodiments shown in figures 7a, 7b and 7c of the water-removal device according to the present invention are to be introduced into a previously prepared bore or aperture of the insulating covering, in which the water-removal device is to be received.

In figure 7d, the water-removal device 30 shown in figure 7c is further modified by the addition of a perforating pin 82, which extends through the innerspace of the conical, tubular element 78 and projects from the first open end thereof together with the material 36. The perforating pin 82 is provided with a head 84, which is separable from the main body of the perforating pin 82 along a weakening line at the first open end of the conical, tubular element. The embodiment of the water-removal device 30 shown in figure 7d is, consequently, readily applicable in connection with an insulating covering. The insulating covering need not be prepared for the introduction of the water-removal device, as the water-removal device is simply forced into the insulating covering as the perforating pin 82 and the head thereof perforate the insulating covering. As the head of the perforating pin contacts the outer cylindrical surface of the pipe or tube, adjacent to which the water-removal device is to be arranged, the head is broken from the main body of the perforating pin 82 along the above-mentioned weakening line, allowing the water-removal device to be forced into its intentional end position, in which the flange component 74 is brought into facial contact with the adjacent outer surface of the insulating covering.

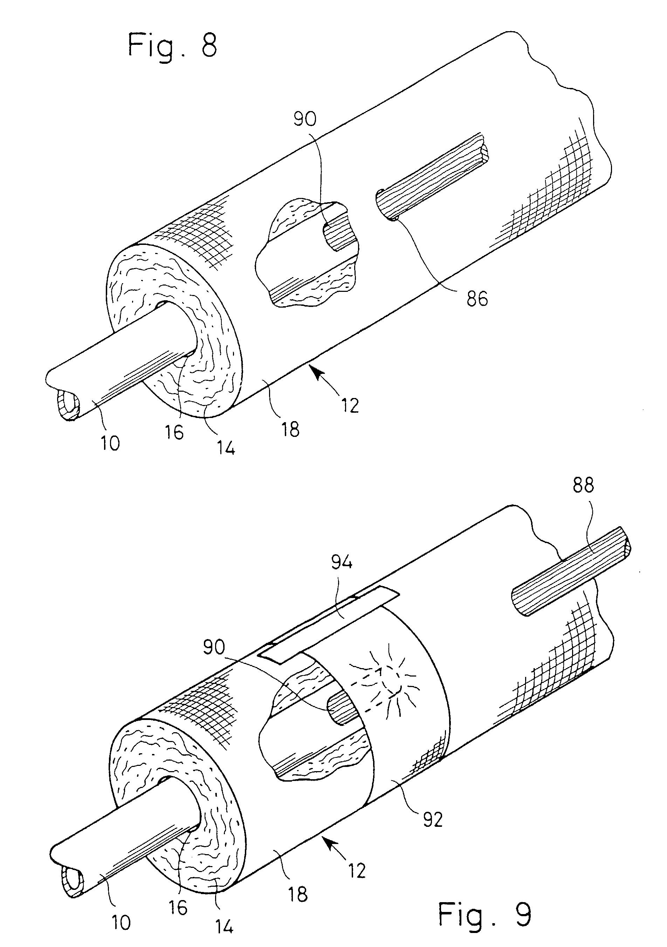

In figures 8 and 9, a novel technique of removing condensed water from the outer surface of the pipe 10 is disclosed. According to the technique disclosed in figures 8 and 9, a rod 90 of a water-transport-allowing material, or preferably a capillary suction material is introduced into a through-going passage 86 extending through the insulating body 14 of the insulating covering 12 from the outer cylindrical surface 18 of the insulating covering 12 to the vicinity of the outer surface of the pipe 10. The rod 90 is preferably arranged in direct contact with the outer surface of the pipe 10. After the rod 90 has been introduced into the through-going passage 86 establishing direct contact with the outer surface of the pipe 10, the rod is cut off at the outer cylindrical surface 18 of the insulating covering 12, providing a free piece of the rod, which piece is shown in fig. 9 and designated the reference numeral 88.

After the rod 90 has been cut off and shortened, providing a filling of the through-going passage 86, which filling serves the same purpose as the filling of the conduit component 32 of the first embodiment 30 of the device according to the present invention shown in fig. 1, a foil 92 of water-transport-allowing material is wound round the insulating covering 12, establishing contact with the rod 90 so as to allow transfer of condensed water from the rod 90 to the foil 92 which serves the purpose as an evaporator body for evaporating the condensed water transferred to the foil 92 to the ambient air. The foil 92 is fixated relative to the insulating covering 92 by means of an adhesive tape 94. In fig. 9, the foil 92 is arranged defining an overlap, however, the foil 92 may constitute a segment covering a part of the outer cylindrical surface 18 of the insulating covering 12, exclusively.

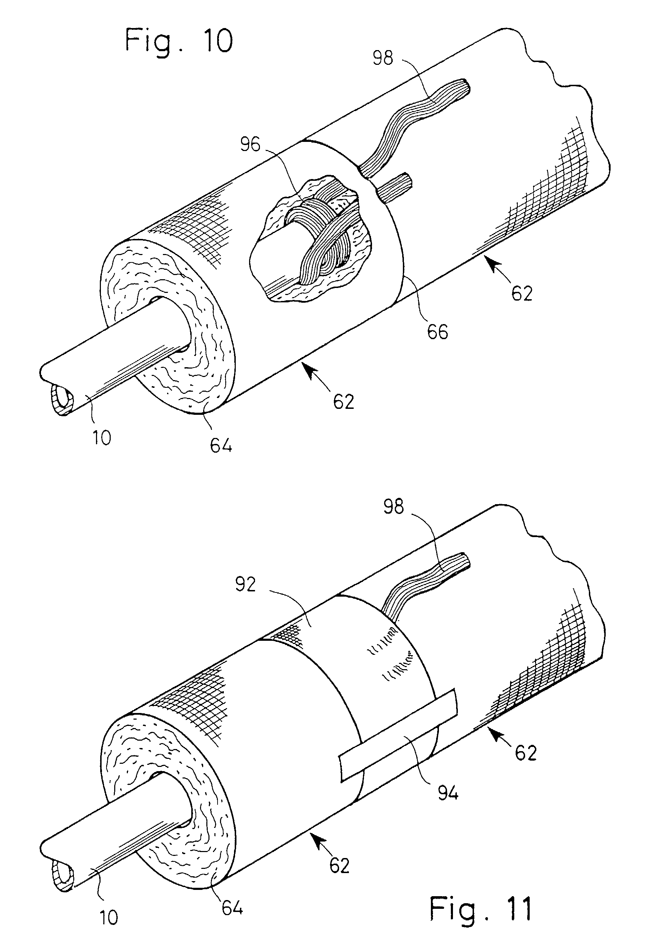

In figures 10 and 11, an alternative technique of removing condensed water from the outer cylindrical surface of the pipe 10 is disclosed. In fig. 10, the insulating covering is divided into two segments 62 similar to the segments 62 shown in fig. 2, which segments, however, may be provided by cutting the insulating covering 12 shown e.g. in figures 1, 3, 8, and 9 along a radial slit providing a through-going slit from the outer cylindrical surface of the insulating covering to the inner cylindrical surface of the insulating covering, which inner cylindrical surface is arranged juxtaposed the outer surface of the pipe 10. After the slit which is designated the reference numeral 66 has been provided, a lead or cord of a water-transport-allowing material is forced into the circumferential and through-going slit 66 providing a winding 96 encircling the outer surface of the pipe 10 and an outwardly protruding free end 98 of the lead or cord. The lead or cord, comprising the winding 96 and the outwardly protruding free end 98, constitutes a water transport means similar to the rod 90 shown in figures 8 and 9 and the filling of the conduit component 30 of the first device 30 shown in fig. 1.

After the lead or cord has been arranged encircling the outer surface of the pipe 10 providing an outwardly protruding free end of the lead or rod, the evaporator foil 92 also shown in figures 8 and 9 is arranged encircling the outer surface of the insulating body comprising the segments 62 and establishing contact with the lead or rod, the free end 98 of which projects or protrudes freely from the circumferential rim of the foil 92 as shown in fig. 11. The free end 98 of the lead or cord may in itself constitute an evaporator for evaporating condensed water transferred from the outer surface of the pipe 10 through the winding 96 to the free end, however, preferably communicates with the foil 92 which serves the purpose of providing an enlarged evaporator surface as compared to the evaporator surface of the free end 98 of the lead or cord.

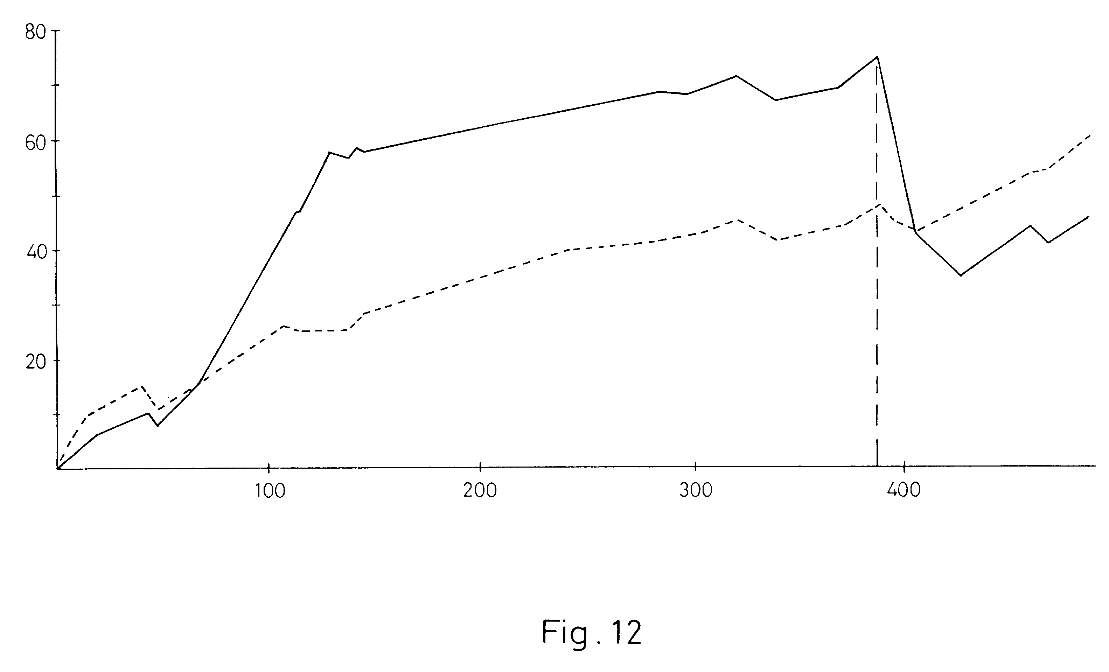

In figure 12, a diagramme is shown, illustrating the water-removal capability of the water-removal technique according to the present invention. A solid line curve illustrates the amount of water, as expressed in gram, which is accumulated within a mineral wool-insulating layer arranged circumferentially encircling a pipe, through which cold water is transferred, and which is provided with an outer aluminum foil coating, from the day of applying the insulation to the pipe. A dotted line curve similarly illustrates the amount of water accumulated within a foamed insulating layer applied to the very same pipe. After 367 days of application, a water-removal device constituted by a prototype implementation of the water-removal device according to the present invention, as shown in figures 1 and 6, was introduced into the mineral wool-insulating layer, resulting in a reduction of the amount of accumulated water from approximately 72g to approximately 32g after approximately 45 days. After the water-removal device had been applied, the amount of water accumulated within the mineral wool-insulating layer was reduced as compared to the amount of water accumulated within the foamed insulating layer.

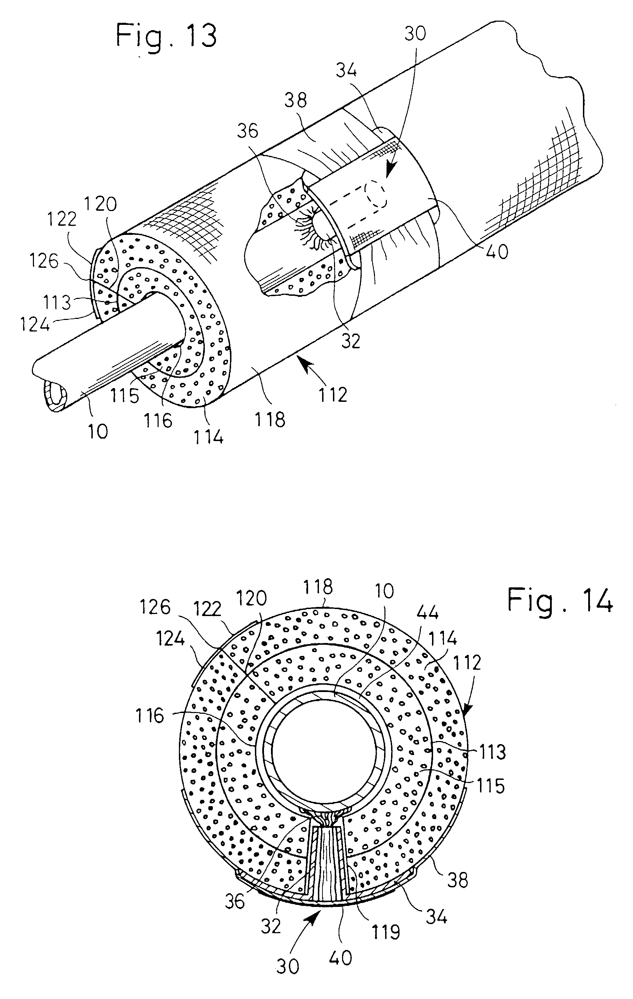

In fig. 13, an alternative application of the first embodiment of the water-removal device according to the present invention described above with reference to figs. 1, 4, 5, and 6 is illustrated. In fig. 13, the pipe 10 is insulated by means of a two-layer foamed insulating covering 112 defining an outer cylindrical surface 118 and an inner cylindrical surface 116 which is arranged adjacent to or juxtaposed to the cylindrical surface of the pipe 10. The two-layer foam 112 insulating covering 112 comprises an outer insulating foamed layer 114 and an inner insulating foamed layer 115 which are separated relative to one another along a separating surface defining a line of separation 113 shown in fig. 13. The two-layer foamed insulating covering 112 may further be provided with an outer protective and water-transport blocking barrier or foil provided at the outer cylindrical surface 118 and an inner water-transport blocking barrier or foil provided at the inner cylindrical surface 116. Basically, the two-layer foamed insulating covering 112 serves the same purpose as the insulating covering 12 discussed above with reference to fig. 1. Similar to the insulating covering 12 described above, the two-layer foamed insulating covering 112 is provided with a longitudinal cut 120 allowing the two-layer foamed insulating covering 112 to be arranged circumferentially encircling the pipe 10. Instead of the adhesive strip 22 of the insulating covering 12 discussed above, the two-layer foamed insulating covering 112 is provided with two locking components 122 and 124 which are locked together in a seal 126 of a zipper-like configuration. Alternatively, burr-like sealing strips or adhesive sealing strips may be provided for assembling the two-layer foamed insulating covering 112 circumferentially encircling the pipe 10.

In Fig. 14, a vertical sectional view thru the two-layer foamed insulating covering 112 and pipe 10 is shown further disclosing the interspace 44 also discussed above with reference to fig. 6 which interspace is defined between the inner cylindrical surface 116 of the two-layer foamed insulating covering 112 and the outer cylindrical surface of the pipe 10. The first embodiment of the water-removal device 30 according to the present invention is as is evident from figs. 13 and 14 arranged in a through-going bore or aperture 119 of the two-layer foamed insulating covering 112 and arranged so as to provide water-transport communication through the material 36 establishing contact with the outer cylindrical surface of the pipe 10 to the water-evaporation foil 38 of the device 30. It is to be realized that the above described two-layer foamed insulating covering 112 may be substituted by a single layer foamed insulating covering which may further constitute an integral body which is not provided with any inner or outer protective and water-transport blocking barriers. The foamed insulating covering being a single layer, a two-layer or a multilayer structure may comprise closed cells or open cells. Furthermore, the above-described two-layer foamed insulating covering 112 may at the interspace between the two foamed layers 114 and 115 be provided with a water-transport blocking barrier or foil.

It is believed that a difference exists between the insulating covering 12 made from mineral wool and the insulating covering 112 made from foamed material as moisture penetrating thru the insulating covering and condensed at the outer cylindrical surface of the pipe, is mainly accumulated at the outer cylindrical surface of the pipe provided the insulating covering is made from mineral wool, whereas moisture is condensed within the foamed material irrespective of whether or not the foamed material comprise closed cells or open cells of foamed material. Although this minor difference exists between mineral wool insulating coverings and foamed insulating coverings, the water-removal concept according to the present invention implemented e.g. by means of the prototype implementation of the device 30 discussed above, renders it possible to eliminate or drain condensed water from the outer surface of the pipe provided the insulating covering is made from mineral wool and from the outer surface of the pipe and also from an inner layer of the insulating covering provided the insulating covering is made from foamed material.

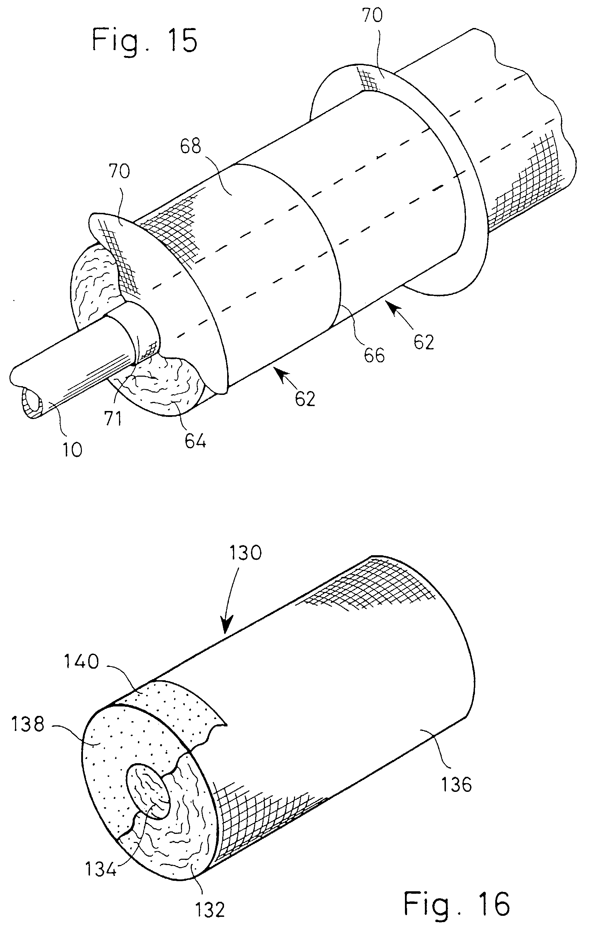

In Fig. 15, a slightly modified embodiment of the heat-insulating assembly according to the present invention described above with reference to Fig. 2 is shown. The embodiment shown in Fig. 15 differs from the embodiment shown in Fig. 2 in that the disc-shaped water removal elements 70 each defines an inner diameter which is somewhat smaller than the outer diameter of the pipe 10. Consequently, the water removal elements 70 each defines a turned end part 71 which is arranged in facial contact with the outer cylindrical surface of the pipe 10. By the provision of the turned end parts 71, a tight fit of the elements 70 around the pipe 10 is established.

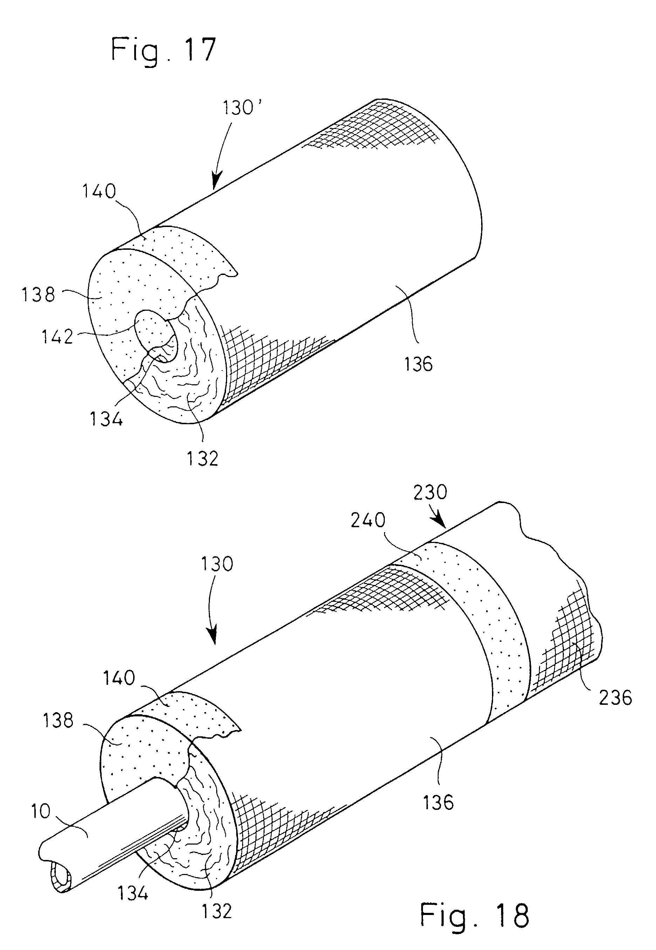

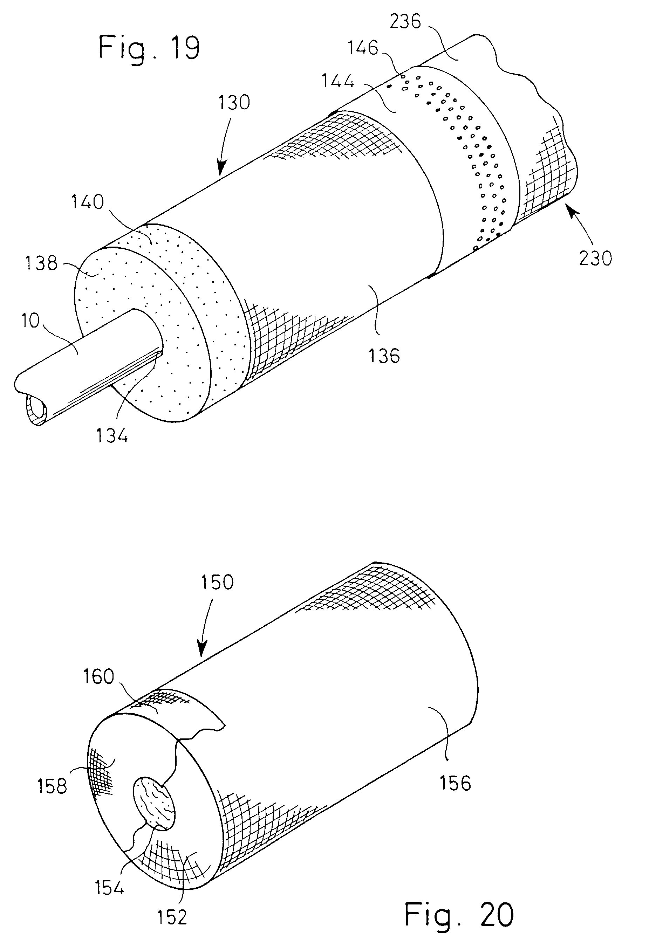

In Fig. 16 a further embodiment of the heat-insulating assembly according to the present invention is shown designated the reference numeral 130 in its entirety. The embodiment shown in Fig. 16 constitutes a segment of an annular, cylidrical insulating covering to be arranged circumferentially encirling a pipe as will be described in greater details below with reference to Figs. 18 and 19. The embodiment 130 comprises an annular, cylindrical segment of an insulating body 132 defining an inner cylindrical surface 134 to be arranged adjacent to or juxtaposed the cylindrical surface of the above-mentioned pipe and defining an outer cylindrical surface 136. The outer cylindrical surface is covered by a water-barrier foil. The insulating body 132 defines an annular end surface which is covered by a layer 138 of a hygroscopic paint which constitutes a means for transport of water from the outer cylindrical surface or the pipe on which the segment 130 is arranged in accordance with the teachings of the present invention. At the outer cylindrical surface 136, a further layer 140 of the hygroscopic paint is applied for providing a means for evaporation of water transferred to the layer 140 through the layer 138. The layer 138 provides a line contact with a part of the outer cylindrical surface of the pipe on which the segment 130 is arranged.

In Fig. 17, a slightly modified embodiment as compared to the embodiment described above with reference to Fig. 16 of the heat-insulating assembly is shown designated the reference numeral 130' in its entirety. The embodiment 130' differs from the above described embodiment 130 in that an additional layer 142 of the hygroscopic paint is applied at the inner cylindrical surface 134 of the insulating body 132. The additional layer 142 is provided for establishing a surface contact with the outer cylindrical surface of the above-mentioned pipe on which the segment 130' is arranged.

The layers 138 and 140 and optionally the additional layer 142 are preferably applied in a single paint application step by spraying or transferring the hygroscopic paint to the insulating body 132 by means of an applicator of any appropriate structure. Provided all three layers 138, 140 and 142 of the hygroscopic paint are provided, the layers 138, 140 and 142 may simply be provided by partly immersing one end of the insulating body 132 into the hygroscopic paint from which the layers 138, 140 and 142 are provided.

In Fig. 18 the segment 130 is arranged encircling the above-described tube 10 together with an additional segment 230 which may be of a structure identical to the structure of the segment 130. The segment 230 defines an ounter cylindrical surface 236 which corresponds to the outer cylindrical surface 156 of the segment 130 and which is provided with a layer 240 of the hygroscopic paint similar to the layer 140 of the layer 130. The segments 130 and 230 are preferably arranged closely adjacent one another in order to eliminate that a gap is established between the annular end surfaces of the segments 130 and 230.

In Fig. 19 a junction between the segments 130 and 230 is sealed by means of a tape constituting a vapor-barrier foil which is provided with partly exposing the layer 240 of the hygroscopic paint of the segment. As is evident from Fig. 19, the tape 144 is a tape composed of two parts one of which is provided with perforations arranged partly exposing the layer 240 of the hygroscopic paint and one of which is arranged sealing the junction between the segments 130 and 230 preventing that vapor or liquid may permeate into the space inevitably provided between the annular end surfaces of the segments 130 and 230 which end surfaces are arranged juxtaposed one another.

The embodiments 130 and 130' may be modified in that the outer vapor-barrier foil 136 may also be applied to the annular end surfaces of the insulating body 132 providing a vapor-barrier closure of the annular end surfaces. In Fig. 16 and 17, only one of the annular end surfaces of the annular cylindrical insulating bodies is provided with a layer of the hygroscopic paint communicating with the outer and optionally the inner layers of the hygroscopic paint. Alternatively, the hygroscopic paint or any other water-transport-allowing material may be applied at both end surfaces of the insulating body of the heat-insulating assembly.

In Fig. 20, a further embodiment of the heat-insulating assembly according to the present invention is shown, designated the reference numeral 150 in its entirety. The embodiment 150 constitutes a segment similar to the segments 130 and 130' described above with reference to Figs. 16 and 17, however, differing from the above described embodiments 130 and 130' in that the annular end surfaces of the annular cylindrical insulating body of the embodiment is covered by a vapor-barrier foil 152 which is integrally connected to an outer circumferential encircling vapor-barrier foil similar to the foil 136 and designated the reference numeral 156. The annular cylindrical insulating body defines an outer cylindrical surface and an inner cylindrical surface 154. At one of the annular end surfaces of the segment 150, a water-transport-allowing foil 158 is applied, which foil is integrally connected to a foil layer 160 provided at the outer cylindrical surface 156 of the segment 150.

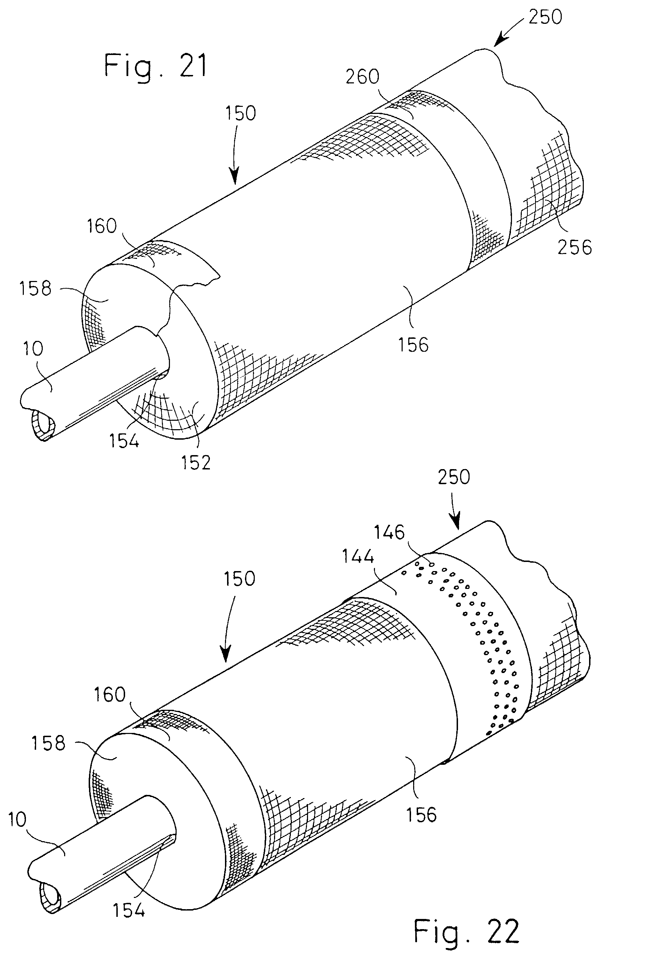

In Fig. 21, the segment 150 is arranged on the pipe 10 described above along with a further segment 250 which may be of a structure identical to the structure of the segment 150 and defines an outer cylindrical surface 256 similar to the surface 156 of the segment 150. A foil 260 of the segment 260 constitutes an evaporator similar to the foil 160 of the segment 150.

The segments 150 and 250 are, like the above described segments 130 and 230, as shown in Fig. 19 preferably provided with a sealing constituted by the above described tape 144 provided with the perforations 146 which are arranged partly exposing the foil 260 in order to allow that water may evaporate from the evaporator 260.

### EXAMPLE 1

A prototype implementation of the water-removal device according to the present invention as shown in figures 1 and 6 was made from the following components: The conduit component 32 was constituted by a tubular segment of a PVC tube of a length of 18 mm having an outer diameter of 12 mm and an inner diameter of 8 mm. The flange component 34 was cast from PVC of a thickness of approximately 2 mm and measured 30 mm x 30 mm. The water-transport-allowing material received within the conduit component 32 was constituted by approximately 1 g of the viscose-based non-woven material. The foil 38 was made from the same water-transport-allowing material as the conduit component 32 of an amount of approximately 1-2 g and measuring 30 mm x 100 mm.

### EXAMPLE 2

In the above described embodiments and in accordance with the above described techniques, the water-transport-allowing material which is preferably a capillary suction material may be provided from any material fulfilling the purpose as discussed above and may e.g. comprise cellulose fibers, non-woven or woven glass or polymer-based non-woven materials such as polypropylene felt materials or any other similar or equivalent material. However, the water-transport-allowing material is preferably a material allowing a transport of water through the material without accumulating an extreme amount of water within the material.

### EXAMPLE 3

The hygroscopic paint may be manufactured from the following components:

| | |
|---|---|
| binder | 5-10% |
| clay | 30-50% |
| water | 40-55% |

The binder may be constituted by a polyvinyl acetate, a polyester dispersion or a water dispersion of natural rubber. For adjustment of the content of solid material and obtaining tixotropic characteristics, additional components of preferably less than 2%, at the most 5% of the paint may be included. All percentages by weight. The clay of the paint constitutes a capillary suction material, and the particle size of clay is 50% ≤ 1µ. Fungicides may additionally be included in the paint. The height of rise of water may amount to 0-500 mm, such as 50-250 mm. The paint is preferably applied as the layers 138, 140, and 142 as shown in Figs. 16-19, in an amount of 50-1000 g/m², preferably 100-500 g/m².

Although the present invention has been described with reference to specific, at present preferred embodiments of alternative devices and techniques of removing condensed water from the outer surface of a body, such as a pipe, the surface temperature of which is at or below the dew point of the ambient air, numerous modifications and alternative embodiments are obvious to a person having ordinary skill in the art. The above detailed description is consequently by no means to be construed limiting the scope of the present invention as defined in the appended claims. Furthermore, the above embodiments and techniques are readily combinable in numerous alternatives as defined in the appended claims. It is to be realized that in the above description of preferred and advantageous embodiments of the devices and techniques of removing condensed water from the outer surface of a body implemented by a pipe, the inner surface of the heat insulating covering is illustrated as an insulating covering arranged a small distance from the outer periphery of the pipe. Alternatively or preferably, the heat insulating covering is arranged in closer contact with the outer surface of the pipe so as to eliminate any space between the inner cylindrical surface of the heat insulating covering and the outer cylindrical surface of the pipe and further reduce the transport of water along the outer cylindrical surface of the pipe.

## Claims

1. A heat-insulating assembly (12, 62, 112, 130, 130', 150) for insulating a surface of a body (10) relative to the ambient air, said surface of said body (10) having a surface temperature at or below the dew point of the ambient air, comprising:
a heat-insulating layer (14; 64; 132; 138; 152; 114, 115) defining an insulating body covering said surface of said body (10), said insulating body (14; 64; 132; 138; 152; 114, 115) defining an inner surface (16, 116, 134, 154) and an outer surface (18, 68, 118, 136, 156), said inner surface (16, 116, 134, 154) being arranged juxtaposed said surface of said body (10),
a water-removal means (36, 70, 90, 138, 158) of a water-transport-allowing material, said water-removal means (36, 70, 90, 138, 158) being embedded within a through-going passage of said insulating body (14; 64; 132; 138; 152; 114, 115) and being exposed at said inner surface (16, 116, 134, 154) of said insulating body (14; 64; 132; 138; 152; 114, 115) so as to contact said water-removal means (36, 70, 90, 138, 158) embedded within said through-going passage with said surface of said body (10) in a point contact or a line contact for allowing transfer of condensed water from said surface of said body (10) to said water-transport-allowing material of said water-removal means (36, 70, 90, 138, 158), and
a water evaporation means (38, 98) of a water-transport-allowing material, said evaporation means (38, 98) defining an exposed evaporation surface and being arranged at said outer surface (18, 68, 118, 136, 156) of said insulating body (10) and communicating with said water-removal means (36, 70, 90, 138, 158) so as to allow transfer of water from said water-removal means (36, 70, 90, 138, 158) to said evaporation means (38, 98), said exposed evaporation surface of said evaporation means (38, 98) being exposed to the ambient air.

2. The heat-insulating assembly (12, 62, 112, 130, 130', 150) according to Claim 1, said body (10) being a tubular body, said heat-insulating layer (14; 64; 132; 138; 152; 114, 115) defining an annular insulating body circumferentially encircling said tubular body (10), and said inner surface (16, 116, 134, 154) and said outer surface (18, 68, 118, 136, 156) being cylindrical surfaces and said inner cylindrical surface (16, 116, 134, 154) being arranged juxtaposed said surface of said tubular body (10).

3. The heat-insulating assembly (12, 62, 112, 130, 130', 150) according to any of the Claims 1 or 2, said water-transport-allowing material of said water-removal means (36, 70, 90, 138, 158) being a capillary suction material.

4. The heat-insulating assembly (12, 62, 112, 130, 130', 150) according to any of the Claims 1-3, said water-transport-allowing material of said water evaporation means (38, 98) being a capillary suction material.

5. The heat-insulating assembly (12, 62, 112, 130, 130', 150) according to any of the Claims 1-4, further comprising a vapor barrier layer arranged at said outer surface (18, 68, 118, 136, 156) of said insulating body (14; 64; 132; 138; 152; 114, 115).

6. The heat-insulating assembly (12, 62, 112, 130, 130', 150) according to any of the Claims 1-5, said water-transport-allowing material of said water-removal means (36, 70, 90, 138, 158) protruding from said inner surface (16, 116, 134, 154) of said insulating body (14; 64; 132; 138; 152; 114, 115).

7. The heat-insulating assembly (62) according to any of the Claims 2-6, said water-removal means (70) being constituted by an annular disc (70) of said water-transport-allowing material, said annular disc (70) being embedded between two cylindrical segments (62) of said annular insulating body (64), said cylindrical segments (62) together defining said through-going passage of said insulating body (14; 64; 132; 138; 152; 114, 115).

8. The heat-insulating assembly (62) according to Claim 7, said evaporation means being constituted by an annular segment (62) of said annular disc-shaped water-removal means (70) protruding from said outer cylindrical surface (18, 68, 118, 136, 156) of said annular insulating body (64).

9. The heat-insulating assembly (62) according to any of the Claims 2-6, said water-removal means being constituted by a cord (96) of said water-transport-allowing material, said cord (96) being arranged circumferentially encircling said tubular body (10) and being embedded between two cylindrical segments (62) of said annular insulating body (64), said cylindrical segments (62) together defining said through-going passage of said insulating body (14; 64; 132; 138; 152; 114, 115).

10. The heat-insulating assembly (62, 130, 130') according to Claim 9, said evaporation means (38, 98) being constituted by a foil (18) of said water-transport-allowing material, said foil (18) being arranged circumferentially encircling said outer cylindrical surface (18, 68, 118, 136, 156) of said annular insulating body (14; 64; 132; 138; 152; 114, 115).

11. The heat-insulating assembly (130, 130') according to any of the Claims 2-6, said water-removal means being constituted by a layer (138) of a hygroscopic paint applied to an annular end surface part of a cylindrical segment of said annular insulating body (132), said annular end surface part of said cylindrical segment together with an annular end surface part of an adjacent cylindrical segment of said annular insulating body (132) defining said through-going passage of said insulating body (14; 64; 132; 138; 152; 114, 115).

12. The heat-insulating assembly (130, 130') according to Claim 11, said evaporation means being constituted by a further layer (140) of said hygroscopic paint applied to said outer surface (136) part of said insulating body (132).

13. The heat-insulating assembly (130, 130') according to Claim 12, said layer (138) of said hygroscopic paint applied to said end surface part of said segment and said further layer (140) of said hygroscopic paint constituting an integral layer of said hygroscopic paint.

14. The heat-insulating assembly (130, 130') according to any of the Claims 1-13, further comprising a perforated foil (144) of a vapor barrier material applied to said water evaporation means and exposing said water evaporation means through perforations of said perforated foil (144).

15. The heat-insulating assembly (12, 62, 112, 130, 130', 150) according to Claim 1, said water-removal means being included in a device (30, 50, 88, 96) for removing condensed water from said surface of said body (10), said heat-insulating layer (14; 64; 132; 152; 114, 115) defining an assembly thickness, and said device (30, 50, 88, 96) comprising:
a conduit means (32, 78, 86) of a tubular configuration and defining a inner through-going passage, said conduit means (32, 78, 86) having a length substantially equal to said assembly thickness, and said conduit means (32, 78, 86) defining opposite first and second open ends,
a plug means (36) of a water-transport-allowing material, said plug means (36) being received within said conduit means (32, 78, 86) and constituting a filling of said inner through-going passage, said water-transport-allowing material being exposed at said first open end of said conduit means (32, 78, 86),
a water evaporation means (38, 98) of a water-transport-allowing material, said evaporation means (38, 98) defining an exposed evaporation surface and being arranged at said second open end of said conduit means (32, 78, 86), and said evaporation means (38, 98) communicating with said plug means (36) at said second open end of said conduit means (32, 78, 86) so as to allow transfer of water from said plug means (36) to said evaporation means (38, 98), and
said conduit means (32, 78, 86) being received within said through-going passage (42) of said heat-insulating layer (14; 64; 132; 138; 152; 114, 115) and fastened relative thereto in a position in which said first open end of said conduit means (32, 78, 86) is positioned adjacent to said surface of said body (10), so as to allow transfer of condensed water from said surface of said body (10) to said water-transport-allowing material of said plug means (36) being exposed at said first open end of said conduit means (32, 78, 86), and in which position said exposed evaporation surface of said evaporation means (38, 98) is positioned at said outer surface (18, 68, 118, 136, 156) of said heat-insulating layer (14; 64; 132; 138; 152; 114, 115) and is exposed to the ambient air.

16. The heat-insulating assembly (12, 62, 112, 130, 130', 150) according to Claim 15, said water-transport-allowing material of said plug means (36) being a capillary suction material.

17. The heat-insulating assembly (12, 62, 112, 130, 130', 150) according to any of the Claims 15 or 16, said water-transport-allowing material of said water evaporation means (38, 98) being a capillary suction material.

18. The heat-insulating assembly (12, 62, 112, 130, 130', 150) according to any of the Claims 15-17, further comprising a vapor barrier layer arranged at said outer surface (18, 68, 118, 136, 156), of said heat-insulating layer (14; 64; 132; 138; 152; 114, 115).

19. The heat-insulating assembly (12, 62, 112, 130, 130', 150) according to any of the Claims 29-32, said water-transport-allowing material of said plug means (36) protruding from said first open end of said conduit means (32, 78, 86).

20. The heat-insulating assembly (12, 62, 112, 130, 130', 150) according to any of the Claims 15-19, said conduit means (32, 78, 86) comprising a flange means (34, 52) at said second open end thereof, said flange means (34, 52) defining a support surface for supporting said evaporation means (38, 88, 98).

21. The heat-insulating assembly (12, 62, 112, 130, 130', 150) according to Claim 20, said support surface being provided with an adhesive layer (76) for adhering said evaporation means (38, 98) to said support surface of said flange means (34, 52).

22. The heat-insulating assembly (12, 62, 112, 130, 130', 150) according to any of the Claims 20 or 21, said flange means (34, 52) being of a curved configuration.

23. The heat-insulating assembly (12, 62, 112, 130, 130', 150) according to Claim 20, said flange means (34, 52) constituting a cylindrical segment.

24. The heat-insulating assembly (12, 62, 112, 130, 130', 150) according to Claim 24, said circular, cylindrical segment defining an arch of the order of 40°-240°, such as an arch of the order of 40°-60° or of the order of 180°-240°, preferably approximately 60° or approximately 200°-220°.

25. The heat-insulating assembly (12, 62, 112, 130, 130', 150) according to any of the Claims 15-24, said heat-insulating assembly (12, 62, 112, 130, 130', 150) comprising a plurality of devices (30, 50, 88, 90, 96) for removing condensed water from said surface of said body (10).

26. The heat-insulating assembly (12, 62, 112, 130, 130', 150) according to Claim 25, said heat-insulating layer (14; 64; 132; 138; 152; 114, 115) defining an annular insulating body (14; 64; 132; 138; 152; 114, 115) circumferentially encircling said body (10) being a tubular body (10), said annular insulating body (14; 64; 132; 138; 152; 114, 115) defining an inner cylindrical surface (16, 116, 134, 154) and an outer cylindrical surface (18, 68, 118, 136, 156), said inner cylindrical surface (16, 116, 134, 154) being arranged juxtaposed said surface of said tubular body (10), said plurality of devices (30, 50, 88, 90, 96) comprising sets of devices (30, 50, 88, 90, 96) being arranged circumferentially spaced apart at said outer cylindrical surface (18, 68, 118, 136, 156) of said annular insulating body (14; 64; 132; 138; 152; 114, 115), and said sets being spaced apart longitudinally along said outer cylindrical surface (18, 68, 118, 136, 156) of said annular insulating body (14; 64; 132; 138; 152; 114, 115).

27. A method of removing condensed water from a surface of a body (10) having a surface temperature at or below the dew point of the ambient air, said surface being insulated relative to the ambient air by means of a heat-insulating assembly (12, 62, 112, 130, 130', 150) defining an inner surface (16, 116, 134, 154) arranged juxtaposed said surface of said body (10) and an outer surface (18, 68, 118, 136, 156), exposed to the ambient air, said method comprising:
providing a through-going passage extending through said heat-insulating assembly (12, 62, 112, 130, 130', 150) defining first and second open ends at said inner and outer surfaces (18, 68, 118, 136, 156), respectively, of said heat-insulating assembly (12, 62, 112, 130, 130', 150),
arranging a water-removal means (36, 70, 90, 138, 158) of a water-transport-allowing material within said through-going passage constituting a filling thereof, said water-transport-allowing material being exposed at said first open end of said through-going passage, so as to contact said water-removal means (36, 70, 90, 138, 158) embedded within said through-going passage with said surface of said body (10) in a point contact or a line contact for transfer of condensed water from said surface of said body (10) to said water-transport-allowing material of said water removal means (36, 70, 90, 138, 158), and
arranging a water evaporation means (38, 98) of a water-transport-allowing material defining an exposed evaporation surface at said second open end of said through-going passage, so as to establish communication between said water-removal means (36, 70, 90, 138, 158) and said evaporation means (38, 98) at said second open end of said through-going passage, and so as to allow transfer of water from said water-removal means (36, 70, 90, 138, 158) to said evaporation means (38, 98), said exposed evaporation surface of said water evaporation means (38, 98) being exposed to the ambient air for evaporating water to the ambient air.

28. The method of Claim 27, said water-transport-allowing material of said water-removal means (36, 70, 90, 138, 158) being a capillary suction material.

29. The method according to any of the Claims 27 or 28, said water-transport-allowing material of said water evaporation means (38, 98) being a capillary suction material.

30. The method according to any of the Claims 27-29, said body (10) being tubular and said heat-insulating assembly (62, 112, 130, 130', 150) defining an annular insulating body (64; 132; 138; 152; 114, 115) circumferentially encircling said tubular body (10), said annular insulating body (64; 132; 138; 152; 114, 115) defining an inner cylindrical surface (16, 116, 134, 154) and an outer cylindrical surface (18, 68, 118, 136, 156), said inner cylindrical surface (16, 116, 134, 154) being arranged juxtaposed the surface of the tubular body (10), and said outer cylindrical surface (18, 68, 118, 136, 156) being exposed to the ambient air, said through-going passage constituting a through-going circumferential slit (66) extending through said insulating body (14; 64; 132; 138; 152; 114, 115) from said outer cylindrical surface (18, 68, 118, 136, 156) to said inner cylindrical surface (16, 116, 134, 154), and said water-removal means being constituted by an elongated and flexible water-transport means (96) of a water-transport-allowing material to be arranged within said circumferential slit (66) encircling said surface of the tubular body (10) and extending from said inner cylindrical surface (16, 116, 134, 154) of said annular insulating body (64; 132; 138; 152; 114, 115) to said outer cylindrical surface (18, 68, 118, 136, 156) of said annular insulating body (64; 132; 138; 152; 114, 115).

31. The method according to any of the Claims 27-29, said body (10) being tubular and said heat-insulating assembly (12, 62, 112, 130, 130', 150) defining an annular insulating body (10) circumferentially encircling said tubular body (10), said annular insulating body (14; 64; 132; 138; 152; 114, 115) defining an inner cylindrical surface (16, 116, 134, 154) and an outer cylindrical surface (18, 68, 118, 136, 156), said inner cylindrical surface (16, 116, 134, 154) being arranged juxtaposed said surface of said tubular body (10), and said outer cylindrical surface (18, 68, 118, 136, 156) being exposed to the ambient air, said method comprising:
said through-going passage constituting a through-going circumferential slit extending through said insulating body (14; 64; 132; 138; 152; 114, 115) from said outer cylindrical surface (18, 68, 118, 136, 156) to said inner cylindrical surface (16, 116, 134, 154), so as to divide said annular insulating body (14; 64; 132; 138; 152; 114, 115) into two segments (136, 236) having juxtaposed end surface parts,
said water-removal means being constituted by a layer of a hygroscopic paint (138) to be applied to at least one of said end surface parts of said segments, said layer extending from said inner cylindrical surface (16, 116, 134, 154) of said annular insulating body (14; 64; 132; 138; 152; 114, 115) to said outer cylindrical surface (18, 68, 118, 136, 156) of said annular insulating body (14; 64; 132; 138; 152; 114, 115) and said water evaporation means being constituted by a further layer of a hygroscopic paint (140) to be applied to said outer cylindrical surface (18, 68, 118, 136, 156) of said annular insulating body (14; 64; 132; 138; 152; 114, 115), said further layer (140) defining an exposed evaporation surface at said outer cylindrical surface (18, 68, 118, 136, 156) of said annular insulating body (14; 64; 132; 138; 152; 114, 115).

32. The method according to Claim 31, said further layer (140) being applied to one of said segments or both segments of said annular insulating body (64; 132; 138; 152; 114, 115).

33. The method according to any of the Claims 31 or 32, said layer (138) of said hygroscopic paint and said further layer (140) of said hygroscopic paint being constituted by a single integral layer.

34. The method according to any of the Claims 31-33, a perforated vapor barrier foil (144) further being arranged covering said further layer (140) and exposing said water evaporation means (98) through perforations (146) of said perforated foil (144).

## Patentansprüche

1. Wärmeisolierender Montagesatz (12, 62, 112, 130, 130' 150) zur Isolierung einer Oberfläche eines Körpers (10) gegenüber der Umgebungsluft, wobei die Oberfläche des Körpers (10) eine Oberflächentemperatur am oder unterhalb des Taupunktes der Umgebungsluft aufweist, umfassend:
eine wärmeisolierende Schicht (14; 64; 132; 138; 152; 114, 115), die einen Isolierkörper definiert, der die Oberfläche des Körpers (10) abdeckt, wobei der Isolierkörper (14; 64; 132; 138; 152; 114, 115) eine Innenfläche (16, 116, 134, 154) und eine Außenfläche (18, 68, 118, 136, 156) definiert, wobei die Innenfläche (16, 116, 134, 154) angrenzend der Oberfläche des Körpers (10) angeordnet ist,
eine Wasserentzugseinrichtung (36, 70, 90, 138, 158) aus einem einen Wassertransport ermöglichenden Material, wobei die Wasserentzugseinrichtung (36, 70, 90, 138, 158) innerhalb eines durchgehenden Durchlasses des Isolierkörpers (14; 64; 132; 138; 152; 114, 115) eingebettet ist und an der Innenfläche (16, 116, 134, 154) des Isolierkörpers (14; 64; 132; 138; 152; 114, 115) offengelegt ist, um auf diese Weise die innerhalb des durchgehenden Durchlasses eingebettete Wasserentzugseinrichtung (36, 70, 90, 138, 158) mit der Oberfläche des Körpers (10) in einem Punktkontakt oder einem Linienkontakt in Berührung zu bringen und die Überführung von Kondenswasser von der Oberfläche des Körpers (10) zu dem einen Wassertransport ermöglichenden Material der Wasserentzugseinrichtung (36, 70, 90, 138, 158) zu ermöglichen, und
eine Wasserverdampfungseinrichtung (38, 98) aus einem einen Wassertransport ermöglichenden Material, wobei die Verdampfungseinrichtung (38, 98) eine freiliegende Verdampfungsfläche definiert, an der Außenfläche (18, 68, 118, 136, 156) des Isolierkörpers (10) angeordnet ist und mit der Wasserentzugseinrichtung (36, 70, 90, 138, 158) kommuniziert, um eine Wasserüberleitung von der Wasserentzugseinrichtung (36, 70, 90, 138, 158) zu der Verdampfungseinrichtung (38, 98) zu ermöglichen, wobei die offenliegende Verdampfungsfläche der Verdampfungseinrichtung (38, 98) der Umgebungsluft ausgesetzt ist.

2. Wärmeisolierender Montagesatz (12, 62, 112, 130, 130' 150) nach Anspruch 1, wobei der Körper (10) ein rohrförmiger Körper ist, die wärmeisolierende Schicht (14; 64; 132; 138; 152; 114, 115) einen ringförmigen Isolierkörper definiert, der den ringförmigen Körper (10) am Umfang umgibt, und die Innenfläche (16, 116, 134, 154) und die Außenfläche (18, 68, 118, 136, 156) zylindrische Flächen sind, wobei die innere zylindrische Fläche (16, 116, 134, 154) angrenzend der Oberfläche des ringförmigen Körpers (10) angeordnet ist.

3. Wärmeisolierender Montagesatz (12, 62, 112, 130, 130' 150) nach Anspruch 1 oder 2, wobei das einen Wassertransport ermöglichende Material der Wasserentzugseinrichtung (36, 70, 90, 138, 158) ein kapillares Saugmaterial ist.

4. Wärmeisolierender Montagesatz (12, 62, 112, 130, 130' 150) nach einem der Ansprüche 1-3, wobei das einen Wassertransport ermöglichende Material der Wasserverdampfungseinrichtung (38, 98) ein kapillares Saugmaterial ist.

5. Wärmeisolierender Montagesatz (12, 62, 112, 130, 130' 150) nach einem der Ansprüche 1-4, desweiteren umfassend eine Dampfbarrierenschicht, die an der Außenfläche (18, 68, 118, 136, 156) des Isolierkörpers (14; 64; 132; 138; 152; 114, 115) angeordnet ist.

6. Wärmeisolierender Montagesatz (12, 62, 112, 130, 130' 150) nach einem der Ansprüche 1-5, wobei das einen Wassertransport ermöglichende Material der Wasserentzugseinrichtung (36, 70, 90, 138, 158) von der Innenfläche (16, 116, 134, 154) des Isolierkörpers (14; 64; 132,' 138; 152; 114, 115) vorragt.

7. Wärmeisolierender Montagesatz (62) nach einem der Ansprüche 2-6, wobei die Wasserentzugseinrichtung (70) durch eine Ringscheibe (70) aus einem einen Wassertransport ermöglichenden Material gebildet ist, wobei die Ringscheibe (70) zwischen zwei zylindrischen Segmenten (62) des ringförmigen Isolierkörpers (64) eingebettet ist und die zylindrischen Segmente (62) zusammen den durchgehenden Durchlaß des Isolierkörpers (14; 64; 132; 138; 152; 114, 115) definieren.

8. Wärmeisolierender Montagesatz (62) nach Anspruch 7, wobei die Verdampfungseinrichtung aus einem ringförmigen Segment (62) der ringförmigen, scheibenförmigen Wasserentzugseinrichtung (70) gebildet ist, die von der äußeren zylindrischen Fläche (18, 68, 118, 136, 156) des ringförmigen Isolierkörpers (64) vorsteht.

9. Wärmeisolierender Montagesatz (62) nach einem der Ansprüche 2-6, wobei die Wasserentzugseinrichtung durch eine Schnur (96) aus dem einen Wassertransport ermöglichenden Material gebildet ist, wobei die Schnur (96) den Umfang des ringförmigen Körpers (10) umschlingend angeordnet ist und zwischen zwei zylindrischen Segmenten (62) des ringförmigen Isolierkörpers (64) eingebettet ist, wobei die zylindrischen Segmente (62) zusammen den durchgehenden Durchlaß des Isolierkörpers (14; 64; 132; 138; 152; 114, 115) definieren.

10. Wärmeisolierender Montagesatz (62, 130, 130') nach Anspruch 9, wobei die Verdampfungseinrichtung (38, 98) durch eine Folie (18) aus dem einen Wassertransport ermöglichenden Material gebildet ist, wobei die Folie (18) den Umfang der zylindrischen Außenfläche (18, 68, 118, 136, 156) des ringförmigen Isolierkörpers (14; 64; 132; 138; 152; 114, 115) umschlingend angeordnet ist.

11. Wärmeisolierender Montagesatz (130, 130') nach einem der Ansprüche 2-6, wobei die Wasserentzugseinrichtung durch eine Schicht (138) eines auf einen ringförmigen Oberflächenendabschnitt eines zylindrischen Segments des ringförmigen Isolierkörpers (132) aufgetragenen hygroskopischen Anstrichs gebildet ist, wobei der ringförmige Oberflächenendabschnitt des zylindrischen Segments zusammen mit dem ringförmigen Oberfiächenendabschnitt eines benachbarten zylindrischen Segments des ringförmigen Isolierkörpers (132) den durchgehenden Durchlaß des Isolierkörpers (14; 64; 132; 138; 152; 114, 115) definiert.

12. Wärmeisolierender Montagesatz (130, 130') nach Anspruch 11, wobei die Verdampfungseinrichtung durch eine weitere Schicht (140) des auf den Außenflächenabschnitt (136) des Isolierkörpers (132) aufgetragenen hygroskopischen Anstrichs gebildet ist.

13. Wärmeisolierender Montagesatz (130, 130') nach Anspruch 12, wobei die Schicht (138) aus dem hygroskopischen Anstrich, der auf den Oberflächenendabschnitt des Segments aufgetragen ist, und die weitere Schicht (140) aus dem hygroskopischen Anstrich eine integrale, hygroskopische Anstrichschicht bilden.

14. Wärmeisolierender Montagesatz (130, 130') nach einem der Ansprüche 1-13, desweiteren umfassend eine perforierte Folie (144) aus einem Dampfsperrenmaterial, das auf die Wasserverdampfungseinrichtung aufgetragen ist und die Wasserverdampfungseinrichtung durch Löcher der perforierten Folie (144) freilegt.

15. Wärmeisolierender Montagesatz (12, 62, 112, 130, 130' 150) nach Anspruch 1, wobei die Wasserentzugseinrichtung in einer Vorrichtung (30, 50, 88, 96) zum Entfernen von Kondenswasser von der Oberfläche des Körpers (10) enthalten ist und die wärmeisolierende Schicht (14; 64; 132; 138; 152; 114, 115) eine Montagedicke definiert, und wobei besagte Vorrichtung (30, 50, 88, 96) aufweist:
eine Leitungseinrichtung (32, 78, 86) in rohrförmiger Konfiguration, die einen inneren durchgehenden Durchlaß definiert, wobei die Leitungseinrichtung (32, 78, 86) eine Länge aufweist, die im wesentlichen gleich der Montagedicke ist, und wobei die Leitungseinrichtung (32, 78, 86) gegenüberliegende erste und zweite offene Enden definiert,
eine Stopfeneinrichtung (36) aus einem einen Wassertransport ermöglichenden Material, wobei die Stopfeneinrichtung (36) innerhalb der Leitungseinrichtung (32, 78, 86) aufgenommen ist und eine Füllung des inneren durchgehenden Durchlasses bildet, wobei das einen Wassertransport ermöglichende Material an dem ersten offenen Ende der Leitungseinrichtung (32, 78, 86) freigelegt ist, und
eine Wasserverdampfungseinrichtung (38, 98) aus einem einen Wassertransport ermöglichenden Material, wobei die Verdampfungseinrichtung (38, 98) eine offenliegende Verdampfungsfläche definiert und an dem zweiten offenen Ende der Leitungseinrichtung (32, 78, 86) angeordnet ist, wobei die Verdampfungseinrichtung (38, 98) mit der Stopfeneinrichtung (36) an dem zweiten offenen Ende der Leitungseinrichtung (32, 78, 86) kommuniziert, um eine Überleitung von Wasser von der Stopfeneinrichtung (36) zu der Verdampfungseinrichtung (38, 98) zu ermöglichen, und wobei
die Leitungseinrichtung (32, 78, 86) innerhalb des durchgehenden Durchlasses (42) der wärmeisolierenden Schicht (14; 64; 132; 138; 152; 114, 115) aufgenommen ist und relativ dazu in einer Position befestigt ist, in welcher das erste offene Ende der Leitungseinrichtung (32, 78, 86) angrenzend der Oberfläche des Körpers (10) positioniert ist, um eine Überleitung von Kondenswasser von der Oberfläche des Körpers (10) zu dem einen Wassertransport ermöglichenden Material der Stopfeneinrichtung (36), die an dem ersten offenen Ende der Leitungseinrichtung (32, 78, 86) freigelegt ist, zu ermöglichen, und in welcher Position die offenliegende Verdampfungsfläche der Verdampfungseinrichtung (38, 98) an der Außenfläche (18, 68, 118, 136, 156) der wärmeisolierenden Schicht (14; 64; 132; 138; 152; 114, 115) positioniert und der Umgebungsluft ausgesetzt ist.

16. Wärmeisolierender Montagesatz (12, 62, 112, 130, 130' 150) nach Anspruch 15, wobei das einen Wassertransport ermöglichende Material der Stopfeneinrichtung (36) ein kapillares Saugmaterial ist.

17. Wärmeisolierender Montagesatz (12, 62, 112, 130, 130' 150) nach Anspruch 15 oder 16, wobei das einen Wassertransport ermöglichende Material der Wasserverdampfungseinrichtung (38, 98) ein kapillares Saugmaterial ist.

18. Wärmeisolierender Montagesatz (12, 62, 112, 130, 130' 150) nach einem der Ansprüche 15-17, desweiteren umfassend eine Dampfbarrierenschicht, die an der Außenfläche (18, 68, 118, 136, 156) des Isolierkörpers (14; 64; 132; 138; 152; 114, 115) angeordnet ist.

19. Wärmeisolierender Montagesatz (12, 62, 112, 130, 130' 150) nach einem der Ansprüche 29-32, wobei das einen Wassertransport ermöglichende Material der Stopfeneinrichtung (36) von dem ersten offenen Ende der Leitungseinrichtung (32, 78, 86) vorragt.

20. Wärmeisolierender Montagesatz (12, 62, 112, 130, 130' 150) nach einem der Ansprüche 15-19, wobei die Leitungseinrichtung (32, 78, 86) an ihrem zweiten offenen Ende eine Flanscheinrichtung (34, 52) aufweist, wobei die Flanscheinrichtung (34, 52) eine Trägerfläche zum Tragen der Verdampfungseinrichtung (38, 88, 98) definiert.

21. Wärmeisolierender Montagesatz (12, 62, 112, 130, 130' 150) nach Anspruch 20, wobei die Trägerfläche mit einer Klebeschicht (76) zum Ankleben der Verdampfungseinrichtung (38, 98) an der Trägerfläche der Flanscheinrichtung (34, 52) versehen ist.

22. Wärmeisolierender Montagessatz (12, 62, 112, 130, 130' 150) nach Anspruch 20 oder 21, wobei die Flanscheinrichtung (34, 52) aus einer kurvenförmigen Konfiguration besteht.

23. Wärmeisolierender Montagesatz (12, 62, 112, 130, 130' 150) nach Anspruch 20, wobei die Flanscheinrichtung (34, 52) ein zylindrisches Segment bildet.

24. Wärmeisolierender Montagesatz (12, 62, 112, 130, 130' 150) nach Anspruch 24, wobei das kreisförmige, zylindrische Segment einen Bogen in der Größenordnung von 40°-240° definiert, wie etwa einen Bogen in der Größenordnung von 40°-60° oder in der Größenordnung von 180°-40°, vorzugsweise ungefähr 60° oder ungefähr 200°-220°.

25. Wärmeisolierender Montagesatz (12, 62, 112, 130, 130' 150) nach einem der Ansprüche 15-24, wobei der wärmeisolierende Montagesatz (12, 62, 112, 130, 130' 150) eine Vielzahl von Vorrichtungen (30, 50, 88, 90, 96) zum Entfernen von Kondenswasser von der Oberfläche des Körpers (10) aufweist.

26. Wärmeisolierender Montagesatz (12, 62, 112, 130, 130' 150) nach Anspruch 25, wobei die wärmeisolierende Schicht (14; 64; 132; 138; 152; 114, 115) einen ringförmigen Isolierkörper (14; 64; 132; 138; 152; 114, 115) definiert, der den Körper (10), welcher ein rohrförmiger Körper (10) ist, am Umfang umgibt, wobei der ringförmige Isolierkörper (14; 64; 132; 138; 152; 114, 115) eine zylindrische Innenfläche (16, 116, 134, 154) und eine zylindrische Außenfläche (18, 68, 118, 136, 156) definiert, wobei die zylindrische Innenfläche (16, 116, 134, 154) angrenzend der Oberfläche des rohrförmigen Körpers (10) angeordnet ist und die Vielzahl der Vorrichtungen (30, 50, 88, 90, 96), welche Gruppen von Vorrichtungen (30, 50, 88, 90, 96) aufweist, am Umfang und voneinander beabstandet an der zylindrischen Außenfläche (18, 68, 118, 136, 156) des ringförmigen Isolierkörpers (14; 64; 132; 138; 152; 114, 115) angeordnet ist, wobei die Gruppen entlang der zylindrischen Außenfläche (18, 68, 118, 136, 156) des ringförmigen Isolierkörpers (14; 64; 132; 138; 152; 114, 115) in Längsrichtung voneinander beabstandet sind.

27. Verfahren zum Entfernen von Kondenswasser von einer Oberfläche eines Körpers (10), der eine Oberflächentemperatur am oder unterhalb des Taupunktes der Umgebungsluft aufweist, wobei die Oberfläche gegenüber der Umgebungsluft mittels eines wärmeisolierenden Montagesatzes (12, 62, 112, 130, 130' 150) isoliert ist, welcher eine angrenzend der Oberfläche des Körpers (10) angeordnete Innenfläche (16, 116, 134, 154) und eine der Umgebungsluft ausgesetzte Außenfläche (18, 68, 118, 136, 156) definiert, umfassend:
Vorsehen eines durchgehenden, sich durch den wärmeisolierenden Montagesatz (12, 62, 112, 130, 130' 150) erstreckenden Durchlasses, der an der Innenfläche und der Außenfläche (18, 68, 118, 136, 156) des wärmeisolierenden Montagesatzes (12, 62, 112, 130, 130' 150) ein erstes offenes Ende bzw. ein zweites offenes Ende definiert,
Anordnen einer Wasserentzugseinrichtung (36, 70, 90, 138, 158) aus einem einen Wassertransport ermöglichenden Material innerhalb des durchgehenden Durchlasses, das dessen Füllung bildet, wobei das einen Wassertransport ermöglichende Material an dem ersten offenen Ende des durchgehenden Durchlasses offengelegt ist, um die innerhalb des durchgehenden Durchlasses eingebettete Wasserentzugseinrichtung (36, 70, 90, 138, 158) mit der Oberfläche des Körpers (10) in einem Punktkontakt oder einem Linienkontakt zur Überleitung von Kondenswasser von der Oberfläche des Körpers (10) zu dem einen Wassertransport ermöglichenden Material der Wasserentzugseinrichtung (36, 70, 90, 138, 158) in Kontakt zu bringen, und
Anordnen einer Wasserverdampfungseinrichtung (38, 98) aus einem einen Wassertransport ermöglichenden Material, das eine offengelegte Verdampfungsfläche an dem zweiten offenen Ende des durchgehenden Durchlasses definiert, um eine Verbindung zwischen der Wasserentzugseinrichtung (36, 70, 90, 138, 158) und der Verdampfungseinrichtung (38, 98) an dem zweiten offenen Ende des durchgehenden Durchlasses aufzubauen und eine Überleitung von Wasser von der Wasserentzugseinrichtung (36, 70, 90, 138, 158) zu der Verdampfungseinrichtung (38, 98) zu ermöglichen, wobei die offenliegende Verdampfungsfläche der Wasserverdampfungseinrichtung (38, 98) der Umgebungsluft zum Verdampfen von Wasser in die Umgebungsluft ausgesetzt ist.

28. Verfahren nach Anspruch 27, wobei das einen Wassertransport ermöglichende Material der Wasserentzugseinrichtung (36, 70, 90, 138, 158) ein kapillares Saugmaterial ist.

29. Verfahren nach Anspruch 27 oder 28, wobei das einen Wassertransport ermöglichende Material der Wasserverdampfungseinrichtung (38, 98) ein kapillares Saugmaterial ist.

30. Verfahren nach einem der Ansprüche 27-29, wobei der Körper (10) rohrförmig ist und der wärmeisolierende Montagesatz (62, 112, 130, 130' 150) einen ringförmigen Isolierkörper (64; 132; 138; 152; 114, 115) definiert, der den rohrförmigen Körper (10) am Umfang umgibt, wobei der ringförmige Isolierkörper (64; 132; 138; 152; 114, 115) eine zylindrische Innenfläche (16, 116, 134, 154) und eine zylindrische Außenfläche (18, 68, 118, 136, 156) definiert, wobei die zylindrische Innenfläche (16, 116, 134, 154) angrenzend der Oberfläche des rohrförmigen Körpers (10) angeordnet ist und die zylindrische Außenfläche (18, 68, 118, 136, 156) der Umgebungsluft ausgesetzt ist, wobei der durchgehende Durchlaß einen durchgehenden Umfangsschlitz (66) bildet, der sich durch den Isolierkörper (14; 64; 132; 138; 152; 114, 115) von der zylindrischen Außenfläche (18, 68, 118, 136, 156) zu der zylindrischen Innenfläche (16, 116, 134, 154) erstreckt, und wobei die Wasserentzugseinrichtung durch eine längliche und flexible Wassertransporteinrichtung (96) aus einem einen Wassertransport ermöglichenden Material gebildet ist, das innerhalb des Umfangsschlitzes (66), der die Oberfläche des rohrförmigen Körpers (10) umgibt und sich von der zylindrischen Innenfläche (16, 116, 134, 154) des ringförmigen Isolierkörpers (14; 64; 132; 138; 152; 114, 115) zu der zylindrischen Außenfläche (18, 68, 118, 136, 156) des ringförmigen Isolierkörpers (14; 64; 132; 138; 152; 114, 115) erstreckt, anzuordnen ist.

31. Verfahren nach einem der Ansprüche 27-29, wobei der Körper (10) rohrförmig ist und der Wärmeisolierende Montagesatz (12, 62, 112, 130, 130' 150) einen ringförmigen Isolierkörper (14; 64; 132; 138; 152; 114, 115) definiert, der den rohrförmigen Körper (10) am Umfang umgibt, wobei der ringförmige Isolierkörper (14; 64; 132; 138; 152; 114, 115) eine zylindrische Innenfläche (16, 116, 134, 154) und eine zylindrische Außenfläche (18, 68, 118, 136, 156) definiert, wobei die zylindrische Innenfläche (16, 116, 134, 154) angrenzend der Oberfläche des rohrförmigen Körpers (10) angeordnet ist und die zylindrische Außenfläche (18, 68, 118, 136, 156) der Umgebungsluft ausgesetzt ist, umfassend:
der durchgehende Durchlaß bildet einen durchgehenden Umfangsschlitz, der sich durch den Isolierkörper (14; 64; 132; 138, 152; 114, 115) von der zylindrischen Außenfläche (18, 68, 118, 136, 156) zu der zylindrischen Innenfläche (16, 116, 134, 154) erstreckt, um den ringförmigen Isolierkörper (14; 64; 132; 138; 152; 114, 115) in zwei Segmente (136, 236) zu teilen, die angrenzende Oberflächenendabschnitte aufweisen,
die Wasserentzugseinrichtung ist durch eine Schicht eines hygroskopischen Anstrichs (138) gebildet, der auf mindestens einer der Oberflächenendabschnitte der Segmente aufzutragen ist, wobei die Schicht sich von der zylindrischen Innenfläche (16, 116, 134, 154) des ringförmigen Isolierkörpers (14; 64; 132; 138; 152; 114, 115) zu der zylindrischen Außenfläche (18, 68, 118, 136, 156) des ringförmigen Isolierkörpers (14; 64; 132; 138; 152; 114, 115) erstreckt und die Wasserverdampfungseinrichtung durch eine weitere Schicht aus einem hygroskopischen Anstrich (140) gebildet ist, der auf die zylindrische Außenfläche (18, 68, 118, 136, 156) des ringförmigen Isolierkörpers (14; 64; 132; 138; 152; 114, 115) aufzutragen ist, wobei die weitere Schicht (140) eine freiliegende Verdampfungsfläche an der zylindrischen Außenfläche (18, 68, 118, 136, 156) des ringförmigen Isolierkörpers (14; 64; 132; 138; 152; 114, 115) definiert.

32. Verfahren nach Anspruch 31, wobei die weitere Schicht (140) auf einem der Segmente oder beiden Segmenten des ringförmigen Isolierkörpers (64, 132; 138; 152; 114, 115) aufgetragen wird.

33. Verfahren nach Anspruch 31 oder 32, wobei die Schicht (138) aus dem hygroskopischen Anstrich und die weitere Schicht (140) aus dem hygroskopischen Anstrich eine integrale Einzelschicht bilden.

34. Verfahren nach einem der Ansprüche 31-33, wobei desweiteren eine perforierte Dampfbarrierenfolie (144) angeordnet wird, welche die weitere Schicht (140) abdeckt und die Wasserverdampfungseinrichtung (98) durch Löcher (146) der perforierten Folie (144) offenlegt.

## Revendications

1. Ensemble d'isolation thermique (12, 62, 112, 130, 130', 150) destiné à isoler une surface d'un corps (10) par rapport à l'air ambiant, ladite surface dudit corps (10) présentant une température de surface inférieure ou égale à celle du point de rosée de l'air ambiant, comprenant:
une couche thermiquement isolante (14; 64; 132; 138; 152; 114, 115) définissant un corps isolant, recouvrant ladite surface dudit corps (10), ledit corps isolant (14; 64; 132; 138; 152; 114, 115) définissant une surface interne (16, 116, 134, 154) et une surface externe (18, 68, 118, 136, 156), ladite surface interne (16, 116, 134, 154) étant agencée de manière juxtaposée à ladite surface dudit corps (10),
un moyen d'élimination d'eau (36, 70, 90, 138, 158) en un matériau permettant le transfert d'eau, ledit moyen d'élimination d'eau, (36, 70, 90, 138, 158) étant noyé à l'intérieur d'un passage traversant dudit corps isolant (14; 64; 132; 138; 152; 114, 115) et débouchant sur ladite surface interne (16, 116, 134, 154) dudit corps isolant (14; 64; 132; 138; 152; 114, 115) de manière à mettre en contact ledit moyen d'élimination d'eau (36, 70, 90, 138, 158) noyé à l'intérieur dudit passage traversant avec ladite surface dudit corps (10), en contact ponctuel ou en contact linéaire, afin de permettre le transfert de l'eau condensée depuis ladite surface dudit corps (10) vers ledit matériau permettant le transfert d'eau dudit moyen d'élimination d'eau(36, 70, 90, 138, 158), et
un moyen d'évaporation d'eau (38, 98) en un matériau permettant le transfert d'eau, ledit moyen d'évaporation (38, 98) définissant une surface d'évaporation apparente et étant agencé sur ladite surface externe (18, 68 118, 136, 156) dudit corps isolant (10) et communicant avec ledit moyen d'élimination d'eau (36, 70, 90, 138, 158) de manière à permettre le transfert de l'eau depuis ledit moyen d'élimination d'eau (36, 70, 90, 138, 158) vers ledit moyen d'évaporation (38, 98), ladite surface d'évaporation apparente dudit moyen d'évaporation (38, 98) étant exposée à l'air ambiant.

2. Ensemble d'isolation thermique (12, 62, 112, 130, 130', 150) selon la revendication 1, ledit corps (10) étant un corps tubulaire, ladite couche thermiquement isolante (14; 64; 132; 138; 152; 114, 115) définissant un corps annulaire isolant entourant circonférentiellement ledit corps tubulaire (10), et ladite surface interne (16, 116, 134, 154) et ladite surface externe (18, 68, 118, 136, 156) étant des surfaces cylindriques et ladite surface cylindrique interne (16, 116, 134, 154) étant agencée de manière juxtaposée à ladite surface dudit corps tubulaire (10).

3. Ensemble d'isolation thermique (12, 62, 112, 130, 130', 150) selon l'une quelconque des revendications 1 ou 2, ledit matériau permettant le transfert d'eau dudit moyen d'élimination d'eau (36, 70, 90, 138, 158) étant un matériau à succion capillaire.

4. Ensemble d'isolation thermique (12, 62, 112, 130, 130', 150) selon l'une quelconque des revendications 1 à 3, ledit matériau permettant le transfert d'eau dudit moyen d'évaporation d'eau (38, 98) étant un matériau à succion capillaire.

5. Ensemble d'isolation thermique (12, 62, 112, 130, 130', 150) selon l'une quelconque des revendications 1 à 4, comprenant, en outre, une couche formant barrière à la vapeur agencée sur ladite surface externe (18, 68, 118, 136, 156) dudit corps isolant (14; 64; 132; 138; 152; 114, 115).

6. Ensemble d'isolation thermique (12, 62, 112, 130, 130', 150) selon l'une quelconque des revendications 1 à 5, ledit matériau permettant le transfert d'eau dudit moyen d'élimination d'eau (36, 70, 90, 138, 158) étant en saillie par rapport à ladite surface interne (16, 116, 134, 154) dudit corps isolant (14; 64; 132; 138; 152; 114, 115).

7. Ensemble d'isolation thermique (62) selon l'une quelconque des revendications 2 à 6, ledit moyen d'élimination d'eau (70) étant constitué par un disque annulaire (70) en ledit matériau permettant le transfert d'eau, ledit disque annulaire (70) étant noyé entre deux segments cylindriques (62) dudit corps annulaire isolant (64), lesdits segments cylindriques (62) définissant ensemble ledit passage traversant dudit corps isolant (14; 64; 132; 138; 152; 114, 115).

8. Ensemble d'isolation thermique (62) selon la revendication 7, ledit moyen d'évaporation étant constitué par un segment annulaire (62) dudit moyen d'élimination d'eau en forme de disque annulaire (70) en saillie par rapport à ladite surface cylindrique externe (18, 68, 118, 136, 156) dudit corps annulaire isolant (64).

9. Ensemble d'isolation thermique (62) selon l'une quelconque des revendications 2 à 6, ledit moyen d'élimination d'eau étant constitué par un cordon (96) en ledit matériau permettant le transfert d'eau, ledit cordon (96) étant agencé de manière à encercler circonférentiellement ledit corps tubulaire (10) et étant noyé entre deux segments cylindriques (62) dudit corps annulaire isolant (64), lesdits segments cylindriques (62) définissant ensemble ledit passage traversant dudit corps isolant (14; 64; 132; 138; 152; 114, 115).

10. Ensemble d'isolation thermique (62, 130, 130') selon la revendication 9, ledit moyen d'évaporation (38, 98) étant constitué par une feuille (18) en ledit matériau permettant le transfert d'eau, ladite feuille (18) étant agencée de manière à encercler circonférentiellement ladite surface cylindrique externe (18, 68, 118, 136, 156) dudit corps annulaire isolant (14; 64; 132; 138; 152; 114, 115).

11. Ensemble d'isolation thermique (130, 130') selon l'une quelconque des revendications 2 à 6, ledit moyen d'élimination d'eau étant constitué par une couche (138) d'une peinture hygroscopique appliquée sur une partie de surface d'extrémité annulaire d'un segment cylindrique dudit corps annulaire isolant (132), ladite partie de surface d'extrémité annulaire dudit segment cylindrique, ensemble avec une partie de surface d'extrémité annulaire d'un segment cylindrique adjacent dudit corps annulaire isolant (132) définissant ledit passage traversant dudit corps isolant (14; 64; 132; 138; 152; 114, 115).

12. Ensemble d'isolation thermique (130, 130') selon la revendication 11, ledit moyen d'évaporation étant constitué par une autre couche (140) en ladite peinture hygroscopique appliquée sur ladite partie de surface externe (136) dudit corps isolant (132).

13. Ensemble d'isolation thermique (130, 130') selon la revendicaticn 12, ladite couche (138) en ladite peinture hygroscopique appliquée sur ladite partie de surface d'extrémité dudit segment et ladite autre couche (140) en ladite peinture hygroscopique constituant une couche unique de ladite peinture hygroscopique.

14. Ensemble d'isolation thermique (130, 130') selon l'une quelconque des revendications 1 à 13, comprenant, en outre, une feuille perforée (144) en un matériau formant barrière à la vapeur appliqué sur ledit moyen d'évaporation et laissant apparaître ledit moyen d'évaporation d'eau à travers des perforations de ladite feuille perforée (144).

15. Ensemble d'isolation thermique (12, 62, 112, 130, 130', 150) selon la revendication 1, ledit moyen d'élimination d'eau étant contenu dans un dispositif (30, 50, 88, 96) destiné à éliminer l'eau condensée de ladite surface dudit corps (10), ladite couche thermiquement isolante (14; 64; 132: 138; 152; 114, 115) définissant une épaisseur d'ensemble, et ledit dispositif (30, 50, 88, 96) comprenant:
un moyen formant conduit (32, 78, 86i d'une configuration tubulaire et définissant un passage interne traversant, ledit moyen formant conduit (32, 78, 86) présentant une longueur sensiblement égale à ladite épaisseur d'ensemble, et ledit moyen formant conduit (32, 78, 86) définissant des première et seconde extrémités débouchantes opposées,
un moyen d'obturation (36) en un matériau permettant le transfert d'eau, ledit moyen d'obturation (36) étant recu à l'intérieur dudit moyen formant conduit (32, 78, 86) et constituant un garnissage dudit passage interne traversant, ledit matériau permettant le transfert d'eau étant apparent sur ladite première extrémité débouchante dudit moyen formant conduit (32, 78, 86);
un moyen d'évaporation d'eau (38, 98) en un matériau permettant le transfert d'eau, ledit moyen d'évaporation (38, 98) définissant une surface d'évaporation apparente et étant agencée sur ladite seconde extrémité débouchante dudit moyen formant conduit (32, 78, 86), et ledit moyen d'évaporation (38, 98) communicant avec ledit moyen d'obturation (36) sur ladite seconde extrémité débouchante dudit moyen formant conduit (32, 78. 86) de manière à permettre le transfert d'eau à partir dudit moyen d'obturation (36) vers ledit moyen d'évaporation (38, 98), et
ledit moyen formant conduit (32, 78, 86) étant recu à l'intérieur dudit passage traversant (42) de ladite couche thermiquement isolante (14; 64; 132; 138; 152; 114, 115) et fixé par rapport à celle-ci dans une position suivant laquelle ladite première extrémité débouchante dudit moyen formant conduit (32, 78, 86) est positionnée de manière adjacente à ladite surface dudit corps (10), afin de permettre le transfert de l'eau condensée depuis ladite surface dudit corps (10) vers ledit matériau permettant le transfert d'eau dudit moyen d'obturation (36) qui est apparent sur ladite première extrémité débouchante dudit moyen formant conduit (32, 78, 86), et dans laquelle position ladite surface d'évaporation apparente dudit moyen d'évaporation (38, 98) est positionnée sur ladite surface externe (18, 68, 118, 136, 156) de ladite couche thermiquement isolante (14; 64; 132; 138; 152; 114, 115) et est exposée à l'air ambiant.

16. Ensemble d'isolation thermique (12, 62, 112, 130, 130', 150) selon la revendication 15, ledit matériau permettant le transfert d'eau dudit moyen d'obturation (36) étant un matériau à succion capillaire.

17. Ensemble d'isolation thermique (12, 62, 112, 130, 130', 150) selon l'une quelconque des revendications 15 ou 16, ledit matériau permettant le transfert d'eau dudit moyen d'évaporation d'eau (38, 98) étant un matériau à succion capillaire.

18. Ensemble d'isolation thermique (12, 62, 112, 130, 130', 150) selon l'une quelconque des revendications 15 à 17, comprenant, en outre, une couche formant barrière à la vapeur agencée sur ladite surface externe (18, 68, 118, 136, 156), de ladite couche thermiquement isolante (14; 64; 132; 138; 152; 114, 115).

19. Ensemble d'isolation thermique (12, 62, 112, 130, 130', 150) selon l'une quelconque des revendications 15 à 18, ledit matériau permettant le transfert d'eau dudit moyen d'obturation (36) étant en saillie par rapport à ladite première extrémité débouchante dudit moyen formant conduit (32, 78, 86).

20. Ensemble d'isolation thermique (12, 62, 112, 130, 130', 150) selon l'une quelconque des revendications 15 à 19 ledit moyen formant conduit (32, 78, 86) comprenant un moyen formant bride (34, 52) à ladite seconde extrémité débouchante, ledit moyen formant bride 134, 52) définissant une surface support destinée à supporter ledit moyen d'évaporation (38, 88, 98).

21. Ensemble d'isolation thermique (12, 62, 112, 130, 130', 150) selon la revendication 20, ladite surface support comportant une couche adhésive (76) destinée à coller ledit moyen d'évaporation (38, 98) sur ladite surface support dudit moyen formant bride (34, 52).

22. Ensemble d'isolation thermique (12, 62, 112, 130, 130', 150) selon l'une quelconque des revendications 20 ou 21, ledit moyen formant bride (34, 52) présentant une configuration courbe.

23. Ensemble d'isolation thermique (12, 62, 112, 130, 130', 150) selon la revendication 20, ledit moyen formant bride (34, 52) constituant un segment cylindrique.

24. Ensemble d'isolation thermique (12, 62, 112, 130, 130', 150) selon la revendication 23, edit segment cylindrique circulaire définissant un arc de l'ordre de 40° à 240°, tel qu'un arc de l'ordre de 40° à 60° ou de l'ordre de 180° à 240°, de préférence approximativement égal 60° ou approximativement compris entre 200° et 220°.

25. Ensemble d'isolation thermique (12, 62, 112, 130, 130', 150) selon l'une quelconque des revendications 15 à 24, ledit ensemble d'isolation thermique (12, 62, 112, 130, 130', 150) comprenant une pluralité de dispositifs (30, 50, 88, 90, 96) afin d'éliminer l'eau condensée de ladite surface dudit corps (10).

26. Ensemble d'isolation thermique (12, 62, 112, 130, 130', 150) selon la revendication 25, ladite couche thermiquement isolante (14; 64; 132; 138; 152; 114, 115) définissant un corps annulaire isolant (14; 64; 132; 138; 152; 114, 115) entourant circonférentiellement ledit corps (10) constitué par un corps tubulaire (10), ledit corps annulaire isolant (14; 64; 132; 138; 152; 114, 115) définissant une surface cylindrique interne (16, 116, 134, 154) et une surface cylindrique externe (18, 68, 118, 136, 156) ladite surface cylindrique interne (16, 116, 134, 154) étant agencée de manière juxtaposée à ladite surface dudit corps tubulaire (10), ladite pluralité de dispositifs (30, 50, 88, 90, 96) comprenant des jeux de dispositifs (30, 50, 88, 90, 96) agencés circonférentiellement, séparés l'un de l'autre, sur ladite surface cylindrique externe (18, 68, 118, 136, 156) dudit corps annulaire isolant (14; 64; 132; 138; 152; 114, 115), et lesdits jeux étant séparés longitudinalement le long de ladite surface cylindrique externe (18, 68, 118, 136, 156) dudit corps annulaire isolant (14; 64; 132; 138; 152; 114, 115).

27. Procédé d'élimination de l'eau condensée d'une surface d'un corps (10) présentant une température de surface inférieure ou égale à celle du point de rosée de l'air ambiant, ladite surface étant isolée par rapport à l'air ambiant au moyen d'un ensemble d'isolation thermique (12, 62, 112, 130, 130', 150) définissant une surface interne (16, 116, 134, 154) agencée de manière juxtaposée à ladite surface dudit corps (10) et une surface externe (18, 68, 118, 136, 156) exposée à l'air ambiant, ledit procédé comprenant:
la réalisation d'un passage traversant s'étendant à travers ledit ensembie d'isolation thermique (12, 62, 112, 130, 130', 150) définissant des première et seconde extrémités débouchant respectivement sur lesdites surfaces interne et externe (18, 68, 118, 136, 156) dudit ensemble d'isolation thermique (12, 62, 112, 130, 130', 150),
l'agencement d'un moyen d'élimination d'eau (36, 70, 90, 138, 158) en un matériau permettant le transfert d'eau à l'intérieur dudit passage traversant constituant un garnissage de celui-ci, ledit matériau permettant le transfert d'eau étant apparent sur ladite première extrémité débouchante dudit passage traversant, de manière à mettre en contact ledit moyen d'élimination d'eau (36, 70, 90, 138, 158) noyé à l'intérieur dudit passage traversant avec ladite surface dudit corps (10), suivant un contact ponctuel ou un contact linéaire, afin d'assurer le transfert de l'eau condensée de ladite surface dudit corps (10) vers ledit matériau permettant le transfert d'eau dudit moyen d'élimination d'eau (36, 70, 90, 138, 158), et
l'agencement d'un moyen d'évaporation d'eau (38, 98) en un matériau permettant le transfert d'eau définissant une surface d'évaporation apparente sur ladite seconde extrémité débouchante dudit passage traversant, de manière à établir la communication entre ledit moyen d'élimination d'eau (36, 70, 90, 138, 158) et ledit moyen d'évaporation (38, 98) sur ladite seconde extrémité débouchante dudit passage traversant, et de manière à permettre le transfert de l'eau dudit moyen d'élimination d'eau (36, 70, 90, 138, 158) vers ledit moyen d'évaporation d'eau (38, 98), ladite surface d'évaporation apparente dudit moyen d'évaporation d'eau (38, 98) étant exposé à l'air ambiant afin d'évaporer l'eau dans l'air ambiant.

28. Procédé selon la revendication 27, ledit matériau permettant le transfert d'eau dudit moyen d'élimination d'eau (36, 70, 90, 138, 158) étant un matériau à succion capillaire.

29. Procédé selon l'une quelconque des revendications 27 ou 28, ledit matériau permettant le transfert d'eau dudit moyen d'évaporation d'eau (38, 98) étant un matériau à succion capillaire.

30. Procédé selon l'une quelconque des revendications 27 à 29, ledit corps (10) étant tubulaire et ledit ensemble d'isolation thermique (12, 62, 112, 130, 130', 150) définissant un corps annulaire isolant (14; 64; 132: 138; 152; 114, 115) entourant circonférentiellement ledit corps tubulaire (10); ledit corps annulaire isolant (14 ; 64; 132; 138; 152; 114, 115) définissant une surface cylindrique interne (16, 116, 134, 154) et une surface cylindrique externe (18, 68, 118, 136, 156), ladite surface cylindrique interne (16, 116, 134, 154) étant agencée de manière juxtaposée à la surface du corps tubulaire (10), et ladite surface cylindrique externe (18, 68, 118, 136, 156) étant exposée à l'air ambiant, ledit passage traversant constituant une fente circonférentielle traversante (66) s'étendant à travers ledit corps isolant (14 ; 64; 132; 138; 152; 114, 115) depuis ladite surface cylindrique externe (18, 68. 118, 136, 156) vers ladite surface cylindrique interne (16, 116, 134, 154) et ledit moyen d'élimination d'eau étant constitué par un moyen de transfert d'eau allongé et flexible (96) en un matériau permettant le transfert d'eau devant être agencé à l'intérieur de ladite fente circonférentielle (66) entourant ladite surface dudit corps tubulaire (10) et s'étendant depuis ladite surface cylindrique interne (16, 116, 134, 154) dudit corps annulaire isolant (14 ; 64; 132; 138; 152; 114, 115) vers ladite surface cylindrique externe (18, 68, 118, 136, 156) dudit corps annulaire isolant (14; 64; 132; 138; 152; 114, 115).

31. Procédé selon l'une quelconque des revendications 27 à 29, ledit corps (10) étant tubulaire et ledit ensemble d'isolation thermique (12, 62, 112, 130, 130', 150) définissant un corps annulaire isolant (10) entourant circonférentiellement ledit corps tubulaire (10), ledit corps annulaire isolant (14; 64; 132; 138; 152; 114, 115) définissant une surface cylindrique interne (16, 116, 134, 154) et une surface cylindrique externe (18, 68, 118, 136, 156), ladite surface cylindrique interne (16, 116, 134, 154) étant agencée de manière juxtaposée à la surface du corps tubulaire (10), et ladite surface cylindrique externe (18, 68, 118, 136, 156) étant exposée à l'air ambiant, ledit procédé comprenant:
ledit passage traversant constituant une fente circonférentielle traversante s'étendant à travers ledit corps isolant (14; 64; 132; 138; 152; 114, 115) depuis ladite surface cylindrique externe (18, 68, 118, 136, 156) vers ladite surface cylindrique interne (16, 116, 134, 154) de manière à diviser ledit corps annulaire isolant (14; 64; 132; 138; 152; 114, 115) en deux segments (136, 236) présentant des parties de surface d'extrémités juxtaposées,
ledit moyen d'élimination d'eau étant constitué par une couche d'une peinture hygroscopique (138) à appliquer sur au moins l'une desdites parties de surface d'extrémité desdits segments, ladite couche s'étendant depuis ladite surface cylindrique interne (16, 116, 134, 154) dudit corps annulaire isolant (14; 64; 132; 138; 152; 114, 115) vers ladite surface cylindrique externe (18, 68, 118, 136, 156) dudit corps annulaire isolant (14; 64; 132; 138; 152; 114, 115) et ledit moyen d'élimination d'eau étant constitué par une autre couche d'une peinture hygroscopique (140) à appliquer sur ladite surface cylindrique externe (18, 68, 118, 136, 156) dudit corps annulaire isolant (14; 64; 132; 138; 152; 114, 115), ladite autre couche (140) définissant une surface d'évaporation apparente sur ladite surface cylindrique externe (18, 68, 118, 136, 156) dudit corps annulaire isolant (14; 64; 132; 138; 152; 114, 115).

32. Procédé selon la revendication 31, ladite autre couche (140) étant appliquée sur l'un desdits segments ou sur les deux segments dudit corps annulaire isolant (14; 64; 132; 138; 152; 114, 115).

33. Procédé selon l'une quelconque des revendications 31 ou 32, ladite couche (138) en ladite peinture hygroscopique et ladite autre couche (140) en ladite peinture hygroscopique étant constituées par une simple couche unique.

34. Procédé selon l'une quelconque des revendications 31 à 33, une feuille formant barrière à la vapeur perforée (144) étant, en outre, agencée de manière à recouvrir ladite autre couche (140) et à laisser apparaître ledit moyen d'évaporation d'eau (98) à travers des perforations (146) de ladite feuille perforée (144).
